# EUROPEAN PATENT APPLICATION

(11) **EP 3 813 024 A1**
(43) Date of publication of application: **28.04.2021**
(21) Application number: 19826478.0
(22) Date of filing: 11.06.2019
(51) Int. Cl.: G06T 15/04, G06T 19/00, H04N 21/4728

(54) **IMAGE PROCESSING DEVICE AND IMAGE PROCESSING METHOD**

(30) Priority: 25.06.2018 JP 2018119438
(71) Applicant: Sony Corporation, 108-0075 Tokyo (JP)
(72) Inventor: TAKAHASHI Hiroaki, Tokyo 108-0075 (JP)
(74) Representative: D Young & Co LLP
(86) International application number: PCT/JP2019/023107
(87) International publication number: WO 2020/004013

(57) **Abstract**

The present technology relates to an image processing apparatus and an image processing method for enabling generation of a high-quality 3D image while suppressing a data amount.

A generation device includes a generation unit that generates 3D shape data representing a 3D shape of an object, mapping data that is two-dimensionally mapped texture information of the object, and area image data of a specific area of one or more captured images obtained by capturing the object from one or more viewpoint positions. The present technology can be applied to, for example, an image processing system that displays a viewing viewpoint image of a 3D model viewed from a predetermined viewing position, or the like.

## Description

### TECHNICAL FIELD

The present technology relates to an image processing apparatus and an image processing method, and particularly relates to an image processing apparatus and an image processing method for enabling generation of a high-quality 3D image while suppressing a data amount.

### BACKGROUND ART

Various technologies have been proposed for generating and transmitting a 3D model. For example, a method of generating a 3D model shape of an object and a color of each point on a surface of the 3D model shape from a plurality of texture images and depth images obtained by capturing the object from a plurality of viewpoints has been proposed (for example, see Non-Patent Document 1).

### CITATION LIST

### NON-PATENT DOCUMENT

Non-Patent Document 1: "High-Quality Streamable Free-Viewpoint Video@SIGGRAPH20152", Alvaro Collet, Ming Chuang, Pat Sweeney, Don Gillett, Dennis Evseev, David Calabrese, Hugues Hoppe, Adam Kirk, Steve Sullivan, ACM Trans. Graphics (SIGGRAPH), 34(4), 2015, Internet <URL: http://hhoppe.com/proj/fvv/>

### SUMMARY OF THE INVENTION

### PROBLEMS TO BE SOLVED BY THE INVENTION

However, according to the technology disclosed in Non-Patent Document 1, a rendering result largely depends on the accuracy of the 3D model of the object and tends to be a distorted image particularly in a case where the number of viewpoints to be captured is small, for example. Meanwhile, an information amount is increased and redundancy becomes large when the number of viewpoints to be captured is increased.

The present technology has been made in view of such a situation and enables generation of a high-quality 3D image while suppressing a data amount.

### SOLUTIONS TO PROBLEMS

An image processing apparatus according to the first aspect of the present technology includes a generation unit configured to generate 3D shape data representing a 3D shape of an object, mapping data that is two-dimensionally mapped texture information of the object, and area image data of a specific area of one or more captured images obtained by capturing the object from one or more viewpoint positions.

An image processing method according to the first aspect of the present technology includes, by an image processing apparatus, generating 3D shape data representing a 3D shape of an object, mapping data that is two-dimensionally mapped texture information of the object, and area image data of a specific area of one or more captured images obtained by capturing the object from one or more viewpoint positions.

In the first aspect of the present technology, 3D shape data representing a 3D shape of an object, mapping data that is two-dimensionally mapped texture information of the object, and area image data of a specific area of one or more captured images obtained by capturing the object from one or more viewpoint positions are generated.

An image processing apparatus according to the second aspect of the present technology includes a synthesis unit configured to synthesize 3D shape data representing a 3D shape of an object, mapping data that is two-dimensionally mapped texture information of the object, and area image data of a specific area of one or more captured images obtained by capturing the object from one or more viewpoint positions to generate a viewing viewpoint synthesis image that is an image of a 3D model of the object viewed from a predetermined viewing position.

An image processing method according to the second aspect of the present technology includes, by an image processing apparatus, synthesizing 3D shape data representing a 3D shape of an object, mapping data that is two-dimensionally mapped texture information of the object, and area image data of a specific area of one or more captured images obtained by capturing the object from one or more viewpoint positions to generate a viewing viewpoint synthesis image that is an image of a 3D model of the object viewed from a predetermined viewing position.

In the second aspect of the present technology, 3D shape data representing a 3D shape of an object, mapping data that is two-dimensionally mapped texture information of the object, and area image data of a specific area of one or more captured images obtained by capturing the object from one or more viewpoint positions are synthesized to generate a viewing viewpoint synthesis image that is an image of a 3D model of the object viewed from a predetermined viewing position.

Note that the image processing apparatuses according to the first and second aspects of the present technology can be implemented by causing a computer to execute a program.

Furthermore, to implement the image processing apparatuses according to the first and second aspects of the present technology, the program executed by the computer can be provided by being transmitted via a transmission medium or by being recorded on a recording medium.

The image processing apparatus may be an independent apparatus or may be internal blocks configuring one apparatus.

### EFFECTS OF THE INVENTION

According to the first and second aspects of the present technology, it is possible to generate a high-quality 3D image while suppressing a data amount.

Note that the effects described here are not necessarily limited, and any of effects described in the present disclosure may be exhibited.

### BRIEF DESCRIPTION OF DRAWINGS

Fig. 1 is a block diagram illustrating a configuration example of an image processing system to which the present technology is applied.
Fig. 2 is a diagram illustrating an arrangement example of imaging devices.
Fig. 3 is a diagram for describing 3D model data.
Fig. 4 is a block diagram illustrating a configuration example of a first embodiment of a generation device.
Fig. 5 is a block diagram illustrating a configuration example of the first embodiment of a reproduction device.
Fig. 6 is a flowchart for describing 3D model data generation processing according to the first embodiment.
Fig. 7 is a flowchart for describing 3D model image generation processing according to the first embodiment.
Fig. 8 is a block diagram illustrating a configuration example of a second embodiment of a generation device.
Fig. 9 is a block diagram illustrating a configuration example of the second embodiment of a reproduction device.
Fig. 10 is a flowchart for describing 3D model data generation processing according to the second embodiment.
Fig. 11 is a flowchart for describing 3D model image generation processing according to the second embodiment.
Fig. 12 is a block diagram illustrating a configuration example of a third embodiment of a generation device.
Fig. 13 is a flowchart for describing 3D model data generation processing according to the third embodiment.
Fig. 14 is a block diagram illustrating a configuration example of an embodiment of a computer to which the present technology is applied.

### MODE FOR CARRYING OUT THE INVENTION

Hereinafter, modes for implementing the present technology (hereinafter referred to as embodiments) will be described. Note that the description will be given in the following order.
1. Image Processing System
2. First Embodiment
3. Flowchart of First Embodiment
4. Second Embodiment
5. Flowchart of Second Embodiment
6. Third Embodiment
7. Flowchart of Third Embodiment
8. Configuration Example of Computer

### <1. Image Processing System>

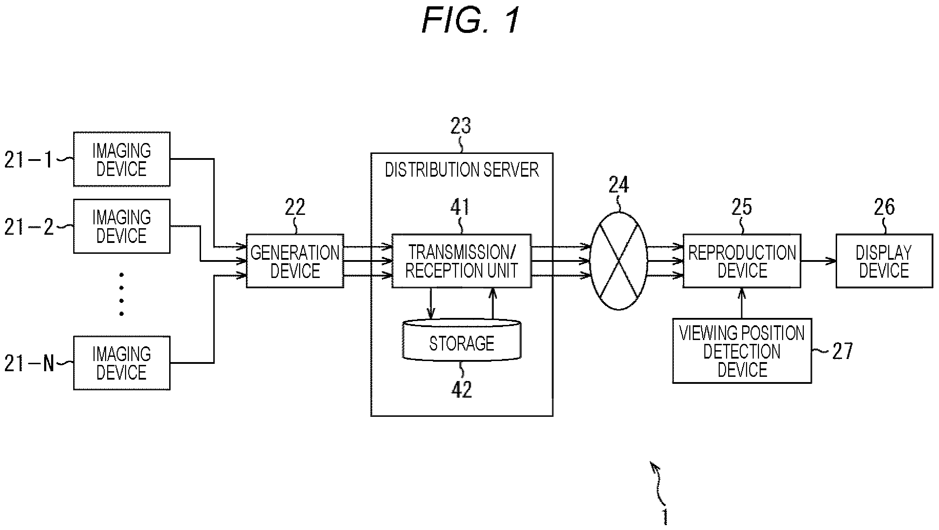

Fig. 1 illustrates a configuration example of an image processing system to which the present technology is applied.

An image processing system 1 in Fig. 1 includes a distribution side in which image data of a 3D model is generated from a plurality of captured images obtained from a plurality of imaging devices 21 and is distributed, and a reproduction side in which the image data of the 3D model transmitted from the distribution side is received, and reproduced and displayed.

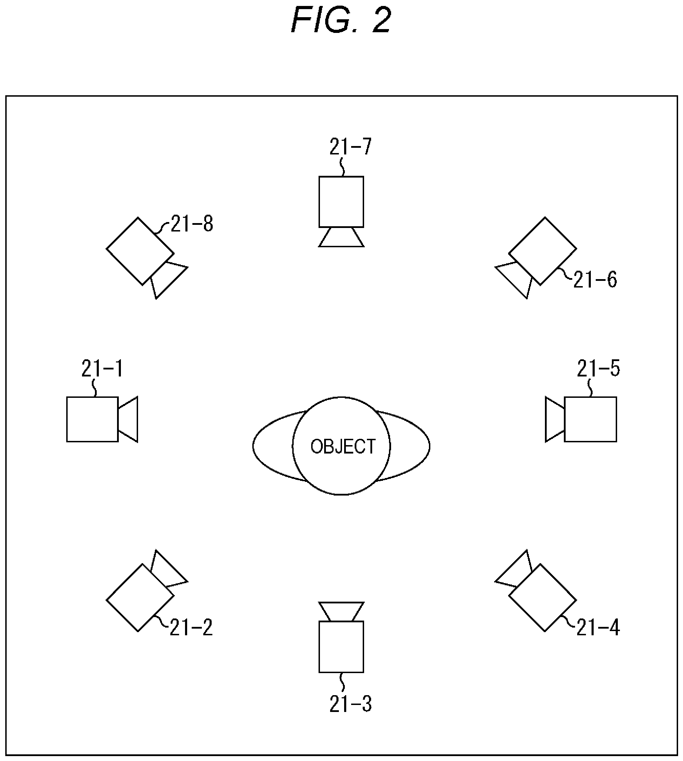

For example, as illustrated in Fig.2, imaging devices 21-1 to 21-N (N > 1) are arranged at different positions in an outer periphery of an object, capture the object, and supply resultant moving images to a generation device 22. Fig. 2 illustrates an example in which eight imaging devices 21-1 to 21-8 are arranged. Each of the imaging devices 21-1 to 21-8 captures an image of the object from a direction different from the other imaging devices 21. It is assumed that the position of each imaging device 21 on a world coordinate system is known.

In the present embodiment, the moving image generated by each imaging device 21 is assumed to be a captured image (RGB image) including RGB wavelengths but the moving image may be a multispectral image including an infrared (IR) image.

Furthermore, each imaging device 21 may perform imaging a plurality of times while changing imaging conditions such as an exposure condition, a light source position, or a light source color, and may supply a resultant captured image to the generation device 22.

Moreover, each imaging device 21 may include a distance measuring sensor and measure a distance to the object, generate a depth image in which the distance to the object in a depth direction is stored as a depth value in association with each pixel of the captured image, in addition to the RGB captured image that is texture information of the object, and supply the depth image to the generation device 22. Furthermore, the distance measuring sensor may be independently present of each imaging device 21.

As a method for the distance measuring sensor for measuring the distance to the object, there are various methods such as a time of flight (TOF) method, a structured light method, a stereo matching method, and a structure from motion (SfM) method, and the method is not particularly limited. The method may be a combination of a plurality of methods. For example, the TOF method is a method of irradiating a target space with near-infrared light, receiving reflected light from an object existing in the target space, and obtaining a distance to the object in the target space on the basis of a time from when radiating the near-infrared light to when receiving the reflected light. Furthermore, the structured light method is a method of projecting a predetermined projection pattern of near-infrared light on an object existing in a target space, and detecting a shape (depth) of the object existing in the target space on the basis of a deformation state of the projection pattern. The stereo matching method is a method of obtaining a distance to an object on the basis of a parallax between two captured images of the object captured from positions different from each other. Furthermore, the SfM method is a method of calculating a relationship between images such as positioning of characteristic points using a plurality of captured images captured at angles different from each other and optimizing the relationship to perform depth detection.

Moreover, each imaging device 21 may generate information regarding reflectance (albedo) of the object as an object, information regarding environmental light or shading, additional information such as bump mapping, transmission mapping, normal mapping, and environmental mapping, and the like, and supply the generated information to the generation device 22.

Each imaging device 21 may be configured to arbitrarily combine the above-described image and additional information and supply the combined information to the generation device 22.

The generation device 22 generates 3D shape data representing a 3D shape of the object, mapping data that is two-dimensionally mapped texture information of the object, and area image data that is image data of a specific area in a plurality of captured images from the plurality of captured images respectively supplied from the imaging devices 21-1 to 21-N, and supplies the generated data to a distribution server 23. Hereinafter, the 3D shape data, the mapping data, and the area image data are collectively referred to as 3D model data.

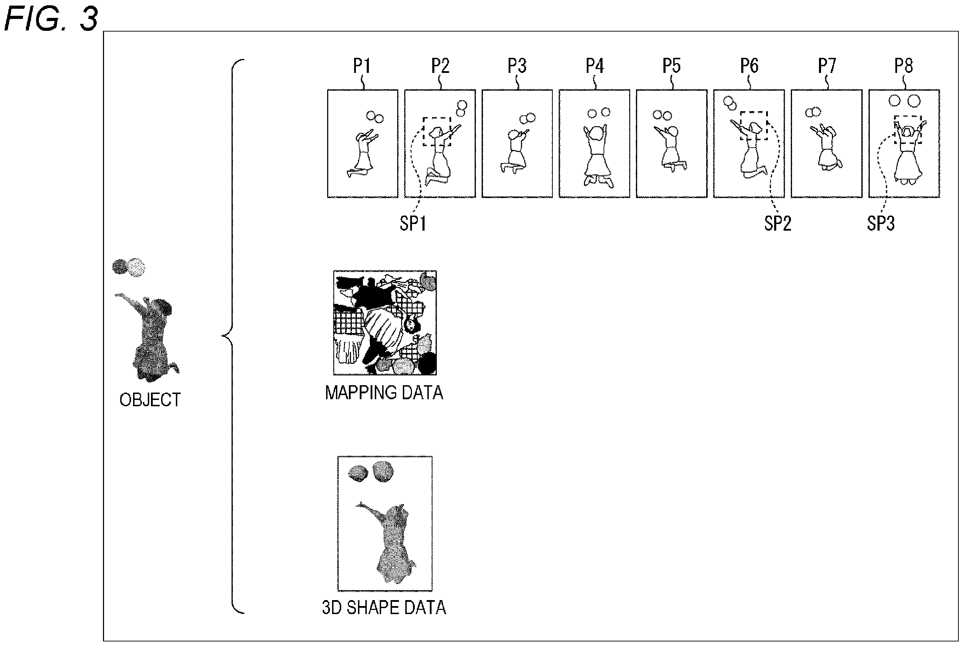

Fig. 3 is a diagram for describing the 3D model data generated by the generation device 22 and transmitted by the distribution server 23.

For example, captured images P1 to P8 are respectively obtained by the imaging devices 21-1 to 21-8. The generation device 22 generates the 3D model of the object from the captured images P1 to P8. The 3D model is configured by the 3D shape data representing the 3D shape (geometry information) of the object and the mapping data that is two-dimensionally mapped texture information of the object. The 3D shape data is, for example, data represented by a polygon mesh, and the mapping data is, for example, data represented by a UV map. Moreover, the generation device 22 extracts one or more specific areas SP desired to have high image quality from the captured images P1 to P8, and generates the area image data. In the example in Fig. 3, three specific areas SP1 to SP3 including a face area of a person who is the object are extracted from the captured images P1 to P8.

Note that the generation device 22 can acquire the captured images temporarily stored in a predetermined storage unit such as a data server instead of directly acquiring the captured images from the imaging devices 21-1 to 21-N, and generate the 3D model data.

Returning to Fig. 1, the distribution server 23 stores the 3D model data supplied from the generation device 22 and transmits the 3D model data to a reproduction device 25 via a network 24 in response to a request from the reproduction device 25.

The distribution server 23 includes a transmission/reception unit 41 and a storage 42.

The transmission/reception unit 41 acquires the 3D model data supplied from the generation device 22 and stores the acquired 3D model data in the storage 42. Furthermore, the transmission/reception unit 41 transmits the 3D model data to the reproduction device 25 via the network 24 in response to a request from the reproduction device 25.

Note that the transmission/reception unit 41 can acquire the 3D model data from the storage 42 and transmit the 3D model data to the reproduction device 25 or can directly transmit (distribute in real time) the 3D model data that is not stored in the storage 42 and supplied from the generation device 22 to the reproduction device 25.

The network 24 is configured by, for example, the Internet, a telephone line network, a satellite communication network, various local area networks (LANs) including Ethernet (registered trademark), a wide area network (WAN), or a dedicated line network such as an internet protocol-virtual private network (IP-VPNs).

The reproduction device 25 generates (reproduces) the 3D model of the object on the basis of the 3D model data transmitted from the distribution server 23 via the network 24. More specifically, the reproduction device 25 attaches the texture information of the mapping data to the 3D shape represented by the 3D shape data as basic texture and further attaches an area image of the specific area SP represented by the area image data to the 3D shape as auxiliary texture to generate the 3D model of the object. Then, the reproduction device 25 generates (reproduces) a 3D model image of the 3D model of the object viewed from a viewing position of a viewer, the viewing position being supplied from a viewing position detection device 27, and supplies the 3D model image to a display device 26.

The display device 26 displays the 3D model image supplied from the reproduction device 25. The viewer views the 3D model image displayed on the display device 26. The viewing position detection device 27 detects the viewing position of the viewer and supplies the detected position to the reproduction device 25.

The display device 26 and the viewing position detection device 27 may be configured as an integrated device. For example, the display device 26 and the viewing position detection device 27 are configured by a head-mounted display, and detects the position to which the viewer has moved, movement of the head, and the like to detect the viewing position of the viewer. The viewing position includes a sight direction of the viewer with respect to the 3D model generated by the reproduction device 25.

As an example of configuring the display device 26 and the viewing position detection device 27 as separate devices, for example, the viewing position detection device 27 is configured by a controller for operating the viewing position or the like, for example, and the viewing position according to an operation of the controller by the viewer is supplied to the reproduction device 25. The reproduction device 25 displays the 3D model image corresponding to the specified viewing position on the display device 26.

The display device 26 or the viewing position detection device 27 can supply information regarding display functions of the display device 26, such as an image size and an angle of view of the image displayed by the display device 26, and the like to the reproduction device 25 as necessary.

The image processing system 1 configured as described above displays a high-quality image by using an image with a suppressed data amount using a free viewpoint image by the basic texture not depending on the viewpoint as the captured image of the entire object, and the area image transmitted as the auxiliary texture as the specific area SP that attracts attention from the viewer. Thereby, high image quality can be implemented while suppressing the data amount to be transmitted.

Hereinafter, detailed configurations of the generation device 22 and the reproduction device 25 will be described.

### <2. First Embodiment>

### <Configuration Example of Generation Device>

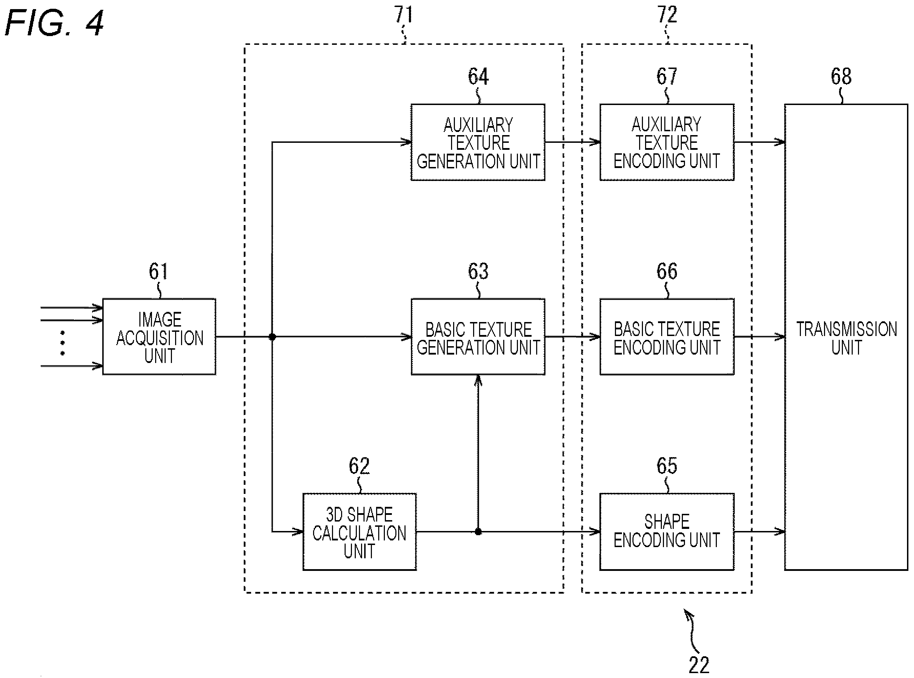

Fig. 4 is a block diagram illustrating a configuration example of a first embodiment of the generation device 22.

The generation device 22 includes an image acquisition unit 61, a 3D shape calculation unit 62, a basic texture generation unit 63, an auxiliary texture generation unit 64, a shape encoding unit 65, a basic texture encoding unit 66, an auxiliary texture encoding unit 67, and a transmission unit 68. The 3D shape calculation unit 62, the basic texture generation unit 63, and the auxiliary texture generation unit 64 may be configured as one generation unit 71, and the shape encoding unit 65, the basic texture encoding unit 66, and the auxiliary texture encoding unit 67 may be configured as one encoding unit 72.

The image acquisition unit 61 acquires a plurality of captured images supplied from the plurality of imaging devices 21 and supplies the captured images to the 3D shape calculation unit 62, the basic texture generation unit 63, and the auxiliary texture generation unit 64.

The 3D shape calculation unit 62 generates 3D shape data representing a 3D shape of an object on the basis of the plurality of captured images supplied from the image acquisition unit 61. For example, the 3D shape calculation unit 62 acquires the 3D shape of the object and generates the 3D shape data by Visual Hull of projecting silhouettes of the object at respective viewpoints on a 3D space and obtaining an intersection area of the silhouettes as a 3D shape, Multi view stereo of using consistency of texture information between viewpoints, or the like.

Note that, to implement processing such as Visual Hull or Multi view stereo, the 3D shape calculation unit 62 requires camera parameters (internal parameters and external parameters) of the plurality of imaging devices 21. Those pieces of information are input in advance in the generation device 22 and are known. For example, the internal parameter is, for example, a focal length of the imaging device 21, image center coordinates, an aspect ratio, or the like, and the external parameter is, for example, a vector indicating a direction and a position of each imaging device 21 in a world coordinate system.

The 3D shape calculation unit 62 can generate the 3D shape data by an arbitrary method such as point cloud format representing a three-dimensional position of the object as a set of points, 3D mesh format for representing the 3D shape data as connection between vertices called polygon mesh, or voxel format for representing the 3D shape data as a set of cubes called voxels. The 3D shape calculation unit 62 supplies the generated 3D shape data to the basic texture generation unit 63 and the shape encoding unit 65.

The basic texture generation unit 63 generates a texture image not depending on a sight direction on the basis of the plurality of captured images supplied from the image acquisition unit 61 and the 3D shape data supplied from the 3D shape calculation unit 62. More specifically, the basic texture generation unit 63 generates mapping data that is two-dimensionally mapped texture information of the object. For example, the basic texture generation unit 63 generates mapping data in which the texture information is mapped by an arbitrary mapping method such as UV mapping in which the texture information is associated with polygon mesh, cube mapping in which the texture information is attached to a cube, cylindrical coordinate projection mapping in which the texture information is attached to a cylinder, or parallel projection mapping in which the texture information is attached to a surface of an object in a parallel projection manner. The basic texture generation unit 63 supplies the generated mapping data to the basic texture encoding unit 66.

The auxiliary texture generation unit 64 selects and cuts out (extracts) one or more specific areas SP from among at least one of the plurality of captured images supplied from the image acquisition unit 61, thereby generating an area image of a specific area SP as auxiliary texture. The auxiliary texture generation unit 64 supplies the area image of the specific area SP and the camera parameters of the imaging device 21 that has captured the area image to the auxiliary texture encoding unit 67. Alternatively, the auxiliary texture generation unit 64 may supply data obtained by converting the area image into mapping data by UV mapping or the like to the auxiliary texture encoding unit 67 as an area image, instead of the cut area image itself cut from the captured image. In this case, no camera parameters are required.

The shape of the selected specific area SP can be an arbitrary shape such as a rectangle, a circle, or a polygon. Furthermore, the shape may be determined by a free curve. Furthermore, the number of specific areas SP selected for one captured image may be one (single) or plural. Furthermore, the size of the selected specific area SP may be a fixed size set in advance or may be a size adaptively changed according to, for example, the object size of the object of interest, such as a face area.

Furthermore, the auxiliary texture generation unit 64 may select the specific area SP by a manual operation for each captured image, such as a user specifying the specific area SP using a mouse, or may automatically select the specific area SP (without the user's operation). An example of the method of automatically selecting the specific area SP includes a method of detecting a face area of a person as an object or a specific object such as a person or a vehicle by recognition processing.

In a case where not only the RGB captured image but also a plurality of types of texture images such as bump map mapping data that expresses texture (pores and wrinkles) in a human skin area is supplied from the imaging device 21 as additional information of the object, the auxiliary texture generation unit 64 selects the specific area SP for each of the plurality of texture images and supplies the selected specific area SP to the auxiliary texture encoding unit 67. By transmitting the plurality of types of texture images regarding the specific areas SP, improvement of the texture when image data is reproduced and displayed by the reproduction device 25 can be expected, for example. Furthermore, in a case where a plurality of types of texture images with different exposure conditions is received from the imaging device 21 as the texture information of the object, a wide dynamic range image with an increased dynamic range can be generated on the reproduction device 25 side, and improvement of the image quality when image data is reproduced and displayed by the reproducing device 25 can be expected.

The user may perform the operation of specifying the specific area SP and the recognition processing for each of the plurality of captured images captured at different capturing positions. However, the auxiliary texture generation unit 64 may select the specific areas SP of the plurality of captured images by reflecting the specific area SP, which has been selected by the manual operation and the recognition processing in one of the plurality of captured images, in areas of the captured images captured at the other capturing positions. In a case of reflecting an area selected in one captured image (first captured image) in another captured image (second captured image), the same position in the world coordinate system may be selected, or the same object at different coordinate positions may be selected.

Furthermore, the selected specific area SP may be continuously selected for captured images continuous in a time direction, and can be tracked or changed in size with respect to a predetermined object.

In a case where the position or size of the specific area SP is changed depending on a captured image, the auxiliary texture generation unit 64 can transmit information regarding the position or size of the specific area SP, for example, coordinates of an upper left end portion of the specific area SP, the width and height of the specific area SP, and the like as meta information.

Furthermore, for example, in a case where the exposure conditions are different among the imaging devices 21 or in a case where the exposure conditions are changed in the time direction in the same imaging device 21, the auxiliary texture generation unit 64 can transmit information for adjusting brightness among the plurality of captured images, such as an exposure time and a gain value, as meta information.

The shape encoding unit 65 encodes the 3D shape data supplied from the 3D shape calculation unit 62 by a predetermined encoding method and supplies resultant encoded 3D shape data to the transmission unit 68. The encoding method is not particularly limited, and an arbitrary method can be adopted. For example, an encoding compression method called "Draco" developed by Google can be adopted (https://mag.osdn.jp/17/01/16/144500) .

Furthermore, the shape encoding unit 65 may encode and transmit information necessary for calculating the 3D shape instead of encoding and transmitting the 3D shape data itself. For example, the shape encoding unit 65 may encode and transmit the silhouette images and camera parameters as information necessary for calculating the 3D shape by Visual Hull, or may encode and transmit the depth images, camera parameters, and the like instead of transmitting the 3D shape data in the point cloud format.

The basic texture encoding unit 66 encodes the mapping data supplied from the basic texture generation unit 63 by a predetermined encoding method and supplies resultant encoded mapping data to the transmission unit 68. The encoding method is not particularly limited, and an arbitrary method can be adopted. For example, a high efficiency video coding (HEVC) method or the like can be adopted for the mapping data by UV mapping. Furthermore, in the case where the 3D shape data is in the point cloud format, RGB information may be added to the position information of each point.

The auxiliary texture encoding unit 67 encodes the area image of the specific area SP supplied from the auxiliary texture generation unit 64 by a predetermined encoding method and supplies resultant encoded area image data to the transmission unit 68. The encoding method is not particularly limited, and for example, an arbitrary method such as an MPEG2 method and the high efficiency video coding (HEVC) method can be adopted. The camera parameters of the imaging device 21 that has captured the area image are stored as metadata in the encoded area image data, for example. The camera parameters may be transmitted for each frame or may be transmitted only at the time of change after transmitted in a first frame of a moving image.

In a case where the specific area SP selected from the captured image is a fixed area in the time direction, compression efficiency can be improved by performing predictive encoding, which is adopted in encoding by the MPEG2 method or the H.264/AVC method, for a plurality of area images adjacent in the time direction, for example.

The transmission unit 68 transmits the encoded 3D shape data, the encoded mapping data, and the encoded area image data supplied from the shape encoding unit 65, the basic texture encoding unit 66, and the auxiliary texture encoding unit 67 to the distribution server 23.

### <Configuration Example of Reproduction Device>

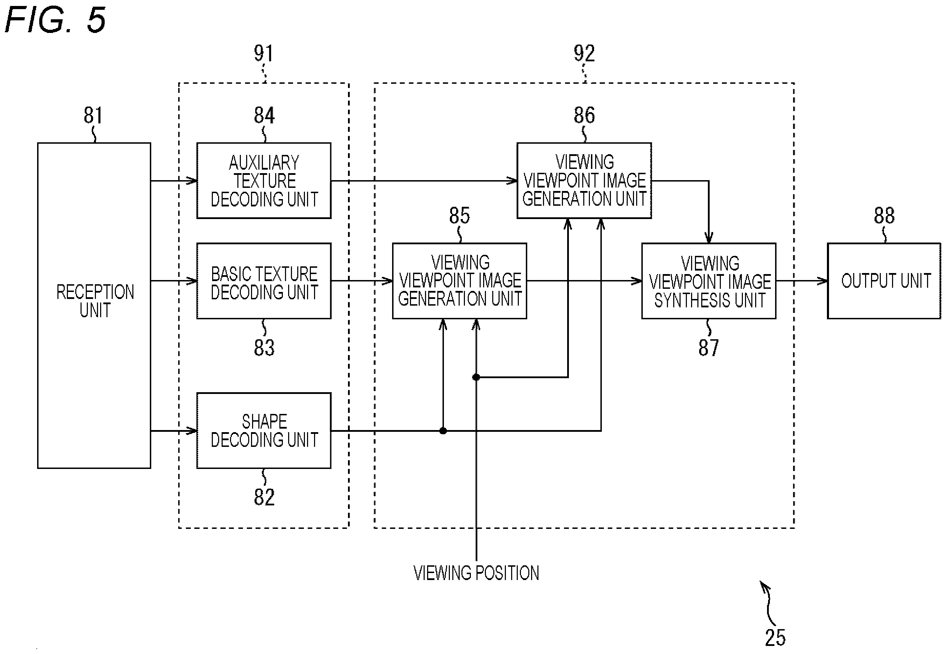

Fig. 5 is a block diagram illustrating a configuration example of the first embodiment of the reproduction device 25.

The reproduction device 25 includes a reception unit 81, a shape decoding unit 82, a basic texture decoding unit 83, an auxiliary texture decoding unit 84, a viewing viewpoint image generation unit 85, a viewing viewpoint image generation unit 86, a viewing viewpoint image synthesis unit 87, and an output unit 88.

The shape decoding unit 82, the basic texture decoding unit 83, and the auxiliary texture decoding unit 84 may be configured as one decoding unit 91, and the viewing viewpoint image generation unit 85, the viewing viewpoint image generation unit 86, and the viewing viewpoint image synthesis unit 87 may be configured as one synthesis unit 92. The decoding unit 91 decodes the encoded 3D shape data, the encoded mapping data, and the encoded area image data. The synthesis unit 92 synthesizes the 3D shape data, the mapping data, and the area image data to generate an image viewed from a predetermined viewing position (viewing viewpoint synthesis image).

The reception unit 81 requests the distribution server 23 to transmit the 3D model data at predetermined timing, and receives the 3D model data, more specifically, the encoded 3D shape data, the encoded mapping data, and the encoded area image data transmitted from the distribution server 23 in response to the request. The reception unit 81 supplies the encoded 3D shape data to the shape decoding unit 82, supplies the encoded mapping data to the basic texture decoding unit 83, and supplies the encoded area image data to the auxiliary texture decoding unit 84.

The shape decoding unit 82 decodes the encoded 3D shape data supplied from the reception unit 81 by a method corresponding to the encoding method of the generation device 22. The shape decoding unit 82 supplies the 3D shape data obtained by decoding to the viewing viewpoint image generation unit 85 and the viewing viewpoint image generation unit 86.

The basic texture decoding unit 83 decodes the encoded mapping data supplied from the reception unit 81 by a method corresponding to the encoding method of the generation device 22. The basic texture decoding unit 83 supplies the mapping data obtained by decoding to the viewing viewpoint image generation unit 85.

The auxiliary texture decoding unit 84 decodes the encoded area image data supplied from the reception unit 81 by a method corresponding to the encoding method of the generation device 22. The auxiliary texture decoding unit 84 supplies one or more area images obtained by decoding to the viewing viewpoint image generation unit 86.

A viewing position of a viewer is supplied from the viewing position detection device 27 (Fig. 1) to the viewing viewpoint image generation unit 85 and the viewing viewpoint image generation unit 86.

The viewing viewpoint image generation unit 85 attaches the texture image of the mapping data supplied from the basic texture decoding unit 83 to a surface of the 3D shape of the 3D shape data supplied from the shape decoding unit 82 to generate a 3D model of the object. Then, the viewing viewpoint image generation unit 85 generates (renders) a viewing viewpoint image (first viewing viewpoint image) that is a 2D image of the generated 3D model of the object viewed from the viewing position supplied from the viewing position detection device 27 (Fig. 1). The viewing viewpoint image generation unit 85 supplies the generated viewing viewpoint image to the viewing viewpoint image synthesis unit 87.

In the case where the mapping method for the mapping data is the UV mapping, each position of the 3D shape of the object corresponds to the texture image. Thus, the texture image of the mapping data can be attached to the surface of the 3D shape. In the case where the mapping method is the parallel projection mapping, the cube mapping, or the like, an attaching position of the texture image is geometrically determined according to the 3D shape of the object and the projection method.

The viewing viewpoint image generation unit 86 attaches one or more area images supplied from the auxiliary texture decoding unit 84 to the surface of the 3D shape corresponding to the 3D shape data supplied from the shape decoding unit 82 to generate a 3D model of the object. In a case where the area image and the camera parameters are included in the area image data, the viewing viewpoint image generation unit 86 geometrically determines an attaching position of the area image from the area image and the camera parameters. In the case where the area image data is configured by the mapping data of the UV mapping or the like, the texture image of the mapping data can be attached to the surface of the 3D shape according to the mapping method, similarly to the basic texture.

The viewing viewpoint image generation unit 86 generates (renders) a viewing viewpoint image (second viewing viewpoint image) that is a 2D image of the generated 3D model of the object viewed from the viewing position supplied from the viewing position detection device 27 (Fig. 1). Since the area image data is data of an image of only a specific area of the object, there is an area (pixels) to which no texture is attached in the viewing viewpoint image generated by the viewing viewpoint image generation unit 86. The viewing viewpoint image generation unit 86 supplies the generated viewing viewpoint image to the viewing viewpoint image synthesis unit 87.

Hereinafter, the viewing viewpoint image based on the basic texture generated by the viewing viewpoint image generation unit 85 will be referred to as a viewing viewpoint basic image, and the viewing viewpoint image based on the auxiliary texture generated by the viewing viewpoint image generation unit 86 will be referred to as a viewing viewpoint auxiliary image, to make distinction.

In a case where two or more area images are included in the area image data, the viewing viewpoint image generation unit 86 generates the viewing viewpoint auxiliary image for each area image. At that time, the viewing viewpoint image generation unit 86 generates and adds reliability in units of pixels of the viewing viewpoint auxiliary image, the reliability being required for the viewing viewpoint image synthesis unit 87 to synthesize a plurality of viewing viewpoint auxiliary images.

The reliability can be generated as follows, for example.

First, the reliability of a pixel to which no texture is attached in the viewing viewpoint auxiliary image is set to 0 and is set as an invalid area. Thereby, it is possible to distinguish an area to which the area image (texture) is attached and an area to which no texture is attached in the viewing viewpoint auxiliary image.

In each pixel to which the area image is attached in the viewing viewpoint auxiliary image, the viewing viewpoint image generation unit 86 can set larger reliability of the viewing viewpoint auxiliary image, for the pixel closer to the imaging device 21 that has captured the area image, for example. Thereby, the image becomes coarser as the distance from the imaging device 21 to the object is more distant. Therefore, a pixel of the viewing viewpoint auxiliary image cut from the captured image captured at a position close to the object can be selected.

Alternatively, for example, the viewing viewpoint image generation unit 86 can set smaller reliability of the viewing viewpoint auxiliary image, for a pixel having an angle that is closer to 90 degrees, the angle being made by the capturing direction of the imaging device 21 that has captured the area image and a normal of the shape of the object of each pixel. By the setting, the area image obliquely facing the imaging device 21 is stretched when attached. Therefore, a pixel of the viewing viewpoint auxiliary image, the pixel facing the front as much as possible, can be selected.

Alternatively, for example, the viewing viewpoint image generation unit 86 can set larger reliability of the viewing viewpoint auxiliary image, for a pixel closer to the center of the captured image captured by the imaging device 21. By the setting, the image of an outer peripheral portion (a position with high image height) in a capture range of the imaging device 21 becomes blurred by distortion correction. Therefore, a pixel of the viewing viewpoint auxiliary image, the pixel being located in the center of the image as much as possible, can be selected.

The above is a method of setting the reliability for each pixel of the viewing viewpoint auxiliary image. However, the reliability may be set for each viewing viewpoint auxiliary image.

For example, the viewing viewpoint image generation unit 86 can set large reliability of the viewing viewpoint auxiliary image with little noise or can set large reliability of the viewing viewpoint auxiliary image cut from the captured image with high resolution by comparing SN ratios of area images. By the setting, the viewing viewpoint auxiliary image with little noise or with high resolution can be selected.

Note that, in a case where not only the viewing position but also information regarding the display functions of the display device 26 is supplied from the viewing position detection device 27 (Fig. 1) to the viewing viewpoint image generation unit 85 or the viewing viewpoint image generation unit 86, the viewing viewpoint image generation unit 85 or the viewing viewpoint image generation unit 86 can generate the viewing viewpoint image on the basis of the information.

The viewing viewpoint image synthesis unit 87 synthesizes the viewing viewpoint basic image based on the basic texture supplied from the viewing viewpoint image generation unit 85 and the viewing viewpoint auxiliary image based on the auxiliary texture supplied from the viewing viewpoint image generation unit 86 to generate a resultant viewing viewpoint synthesis image.

For a pixel having no viewing viewpoint auxiliary image based on the auxiliary texture, the viewing viewpoint basic image based on the basic texture is adopted as it is as the viewing viewpoint synthesis image in the generation of the viewing viewpoint synthesis image. For a pixel in which the viewing viewpoint basic image and one viewing viewpoint auxiliary image are present, the viewing viewpoint auxiliary image is adopted as the viewing viewpoint synthesis image. For a pixel in which the viewing viewpoint basic image and two or more viewing viewpoint auxiliary images are present, the viewing viewpoint auxiliary image with highest reliability is adopted as the viewing viewpoint synthesis image. Since a step may be caused at a boundary between the pixel in which the viewing viewpoint auxiliary image is adopted and the pixel in which the viewing viewpoint basic image is adopted in the viewing viewpoint synthesis image, the viewing viewpoint image synthesis unit 87 performs alpha blend processing and smooth the viewing viewpoint basic image and the viewing viewpoint auxiliary image near a boundary of an invalid area where the reliability is 0.

The viewing viewpoint image synthesis unit 87 supplies the generated viewing viewpoint synthesis image to the output unit 88 as a 3D model image. The output unit 88 converts the viewing viewpoint synthesis image as a 3D model image into a signal format corresponding to the input format of the display device 26, and outputs the signal.

### <3. Flowchart of First Embodiment>

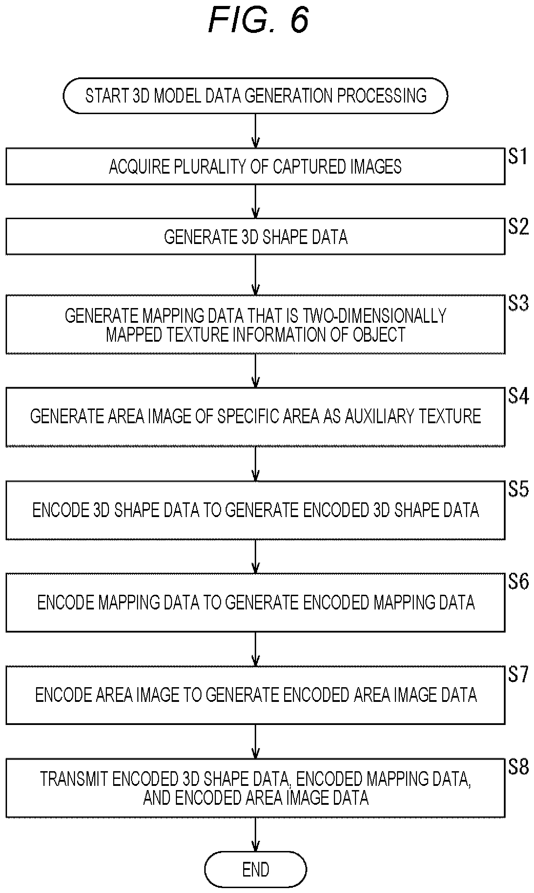

Next, 3D model data generation processing by the generation device 22 according to the first embodiment will be described with reference to the flowchart in Fig. 6.

First, in step S1, the image acquisition unit 61 acquires a plurality of captured images supplied from the plurality of imaging devices 21 and supplies the captured images to the 3D shape calculation unit 62, the basic texture generation unit 63, and the auxiliary texture generation unit 64.

In step S2, the 3D shape calculation unit 62 generates 3D shape data representing a 3D shape of an object on the basis of the plurality of captured images supplied from the image acquisition unit 61. The 3D shape calculation unit 62 supplies the generated 3D shape data to the basic texture generation unit 63 and the shape encoding unit 65.

In step S3, the basic texture generation unit 63 generates mapping data that is two-dimensionally mapped texture information of the object on the basis of the plurality of captured images supplied from the image acquisition unit 61 and the 3D shape data supplied from the 3D shape calculation unit 62. The basic texture generation unit 63 supplies the generated mapping data to the basic texture encoding unit 66.

In step S4, the auxiliary texture generation unit 64 selects and cuts a specific area SP from at least one of the plurality of captured images, thereby generating an area image of the specific area SP as auxiliary texture. The auxiliary texture generation unit 64 supplies the area image of the specific area SP and the camera parameters of the imaging device 21 that has captured the area image as area image data to the auxiliary texture encoding unit 67. The camera parameters may be transmitted for each frame on a constant basis or may be transmitted only at the time of change after transmitted in a first frame of a moving image.

The processing in steps S2 and S3 and the processing in S4 can be executed in any order or can be executed in parallel.

In step S5, the shape encoding unit 65 encodes the 3D shape data supplied from the 3D shape calculation unit 62 by a predetermined encoding method to generate encoded 3D shape data and supplies the encoded 3D shape data to the transmission unit 68.

In step S6, the basic texture encoding unit 66 encodes the mapping data supplied from the basic texture generation unit 63 by a predetermined encoding method to generate encoded mapping data and supplies the encoded mapping data to the transmission unit 68.

In step S7, the auxiliary texture encoding unit 67 encodes the area image supplied from the auxiliary texture generation unit 64 by a predetermined encoding method to generate encoded area image data and supplies the encoded area image data to the transmission unit 68. In the encoding, predictive encoding, which is adopted in encoding by the MPEG2 method or the H.264/AVC method, is performed for a plurality of area images adjacent in the time direction. The camera parameters of the imaging device 21 that has captured the area image are stored as metadata in the encoded area image data, for example.

The processing in steps S5 to S7 can be executed in any order or can be executed in parallel.

In step S8, the transmission unit 68 transmits the encoded 3D shape data, the encoded mapping data, and the encoded area image data to the distribution server 23.

The above processing in steps S1 to S8 is repeatedly executed while the captured images are supplied from the plurality of imaging devices 21. Then, in a case where supply of the captured images is completed, the 3D model data generation processing is terminated.

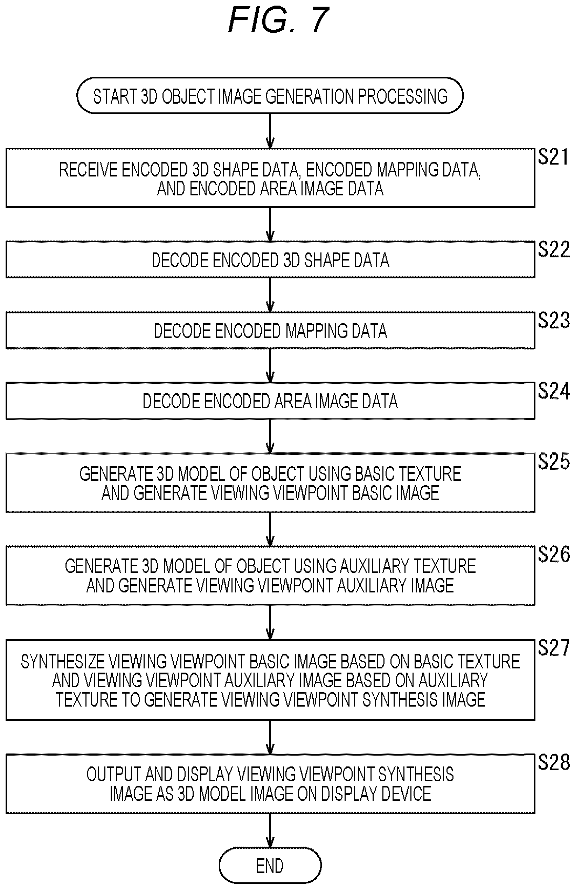

Next, 3D model image generation processing by the reproduction device 25 according to the first embodiment will be described with reference to the flowchart in Fig. 7.

First, in step S21, the reception unit 81 requests the distribution server 23 to transmit the 3D model data and receives the 3D model data, more specifically, the encoded 3D shape data, the encoded mapping data, and the encoded area image data transmitted from the distribution server 23 in response to the request. The reception unit 81 supplies the encoded 3D shape data to the shape decoding unit 82, supplies the encoded mapping data to the basic texture decoding unit 83, and supplies the encoded area image data to the auxiliary texture decoding unit 84.

In step S22, the shape decoding unit 82 decodes the encoded 3D shape data supplied from the reception unit 81 by a method corresponding to the encoding method of the generation device 22. The 3D shape data obtained by decoding is supplied to the viewing viewpoint image generation unit 85 and the viewing viewpoint image generation unit 86.

In step S23, the basic texture decoding unit 83 decodes the encoded mapping data supplied from the reception unit 81 by a method corresponding to the encoding method of the generation device 22. The basic texture decoding unit 83 supplies the mapping data obtained by decoding to the viewing viewpoint image generation unit 85.

In step S24, the auxiliary texture decoding unit 84 decodes the encoded area image data supplied from the reception unit 81 by a method corresponding to the encoding method of the generation device 22. One or more area images obtained by decoding are supplied to the viewing viewpoint image generation unit 86.

The processing in steps S22 to S24 can be executed in any order or can be executed in parallel.

In step S25, the viewing viewpoint image generation unit 85 generates a 3D model of the object using the basic texture to generate a viewing viewpoint basic image. More specifically, the viewing viewpoint image generation unit 85 attaches the texture image of the mapping data supplied from the basic texture decoding unit 83 to a surface of the 3D shape of the 3D shape data supplied from the shape decoding unit 82 to generate a 3D model of the object. Then, the viewing viewpoint image generation unit 85 generates a viewing viewpoint basic image that is a 2D image of the generated 3D model of the object viewed from a viewing position supplied from the viewing position detection device 27. The generated viewing viewpoint basic image is supplied to the viewing viewpoint image synthesis unit 87.

In step S26, the viewing viewpoint image generation unit 86 generates a 3D model of the object using the auxiliary texture to generate a viewing viewpoint auxiliary image. More specifically, the viewing viewpoint image generation unit 86 attaches one or more area images supplied from the auxiliary texture decoding unit 84 to the surface of the 3D shape corresponding to the 3D shape data supplied from the shape decoding unit 82 to generate a 3D model of the object. The viewing viewpoint image generation unit 86 generates a viewing viewpoint auxiliary image that is a 2D image of the generated 3D model of the object viewed from a viewing position supplied from the viewing position detection device 27. The generated viewing viewpoint auxiliary image is supplied to the viewing viewpoint image synthesis unit 87.

The processing in steps S25 and S26 can be executed in reverse order or can be executed in parallel.

In step S27, the viewing viewpoint image synthesis unit 87 synthesizes the viewing viewpoint basic image based on the basic texture supplied from the viewing viewpoint image generation unit 85 and the viewing viewpoint auxiliary image based on the auxiliary texture supplied from the viewing viewpoint image generation unit 86 to generate a viewing viewpoint synthesis image. The generated viewing viewpoint synthesis image is supplied as a 3D model image to the output unit 88.

In step S28, the output unit 88 outputs the viewing viewpoint synthesis image as a 3D model image to the display device 26 and causes the display device 26 to display the viewing viewpoint synthesis image.

The above processing in steps S21 to S28 is repeatedly executed while the 3D model data is supplied from the distribution server 23. Then, in a case where supply of the 3D model data is completed, the 3D model image generation processing is terminated.

According to the above-described first embodiment of the image processing system 1, the generation device 22 generates the area image data of the specific area SP in which only an area especially desired to have high image quality is selected according to the plurality of captured images in addition to the 3D shape data representing the 3D shape of the object and the mapping data that is two-dimensionally mapped texture information of the object. The reproduction device 25 synthesizes the area image of the area image data with the image of the 3D model generated using the 3D shape data and the mapping data to generate a display image to be presented to the viewer.

By selecting and transmitting only some of the specific areas SP desired to have high image quality in the object, a high-quality free viewpoint image can be implemented while suppressing a transfer data amount and a calculation amount.

### (Modification)

The above-described first embodiment can be modified as follows.

In the above-described first embodiment, in the case where a plurality of viewing viewpoint auxiliary images is generated by the viewing viewpoint image generation unit 86, the viewing viewpoint image generation unit 86 has supplied all the generated viewing viewpoint auxiliary images to the viewing viewpoint image synthesis unit 87, and the viewing viewpoint image synthesis unit 87 has adopted the viewing viewpoint auxiliary image having the highest reliability and synthesized the viewing viewpoint auxiliary image with the viewing viewpoint basic image to generate the viewing viewpoint synthesis image.

However, the viewing viewpoint image generation unit 86 may supply only the viewing viewpoint auxiliary image having the highest reliability in all the generated viewing viewpoint auxiliary images to the viewing viewpoint image synthesis unit 87, and the viewing viewpoint image synthesis unit 87 may use the viewing viewpoint basic image as it is for an area where no viewing viewpoint auxiliary image is supplied to generate the viewing viewpoint synthesis image, and use the viewing viewpoint auxiliary image for an area where the viewing viewpoint auxiliary image is supplied to generate the viewing viewpoint synthesis image

Alternatively, the viewing viewpoint image synthesis unit 87 may synthesize the plurality of viewing viewpoint auxiliary images supplied from the viewing viewpoint image generation unit 86 by weighting addition according to the reliability to generate a viewing viewpoint auxiliary synthesis image, and synthesize the viewing viewpoint auxiliary synthesis image with the viewing viewpoint basic image based on the basic texture to generate the viewing viewpoint synthesis image.

Furthermore, in the above-described first embodiment, first, the viewing viewpoint image generation unit 85 and the viewing viewpoint image generation unit 86 have generated the viewing viewpoint basic image and the viewing viewpoint auxiliary image viewed from the viewing position, and thereafter the viewing viewpoint image synthesis unit 87 has synthesized the viewing viewpoint basic image and the viewing viewpoint auxiliary image. That is, synthesis of the viewing viewpoint images has been performed after rendering.

However, rendering may be performed after the synthesis of the viewing viewpoint images is performed. That is the viewing viewpoint image generation unit 85 supplies a 3D model of the object, which is generated by attaching the texture image of the mapping data to the surface of the 3D shape of the 3D shape data, to the viewing viewpoint image synthesis unit 87, and the viewing viewpoint image generation unit 86 supplies a 3D model of the object, which is generated by attaching the area image of the area image data to the surface of the 3D shape corresponding to the 3D shape data, to the viewing viewpoint image synthesis unit 87. The viewing viewpoint image synthesis unit 87 synthesizes the 3D model from the viewing viewpoint image generation unit 85 with the 3D model from the viewing viewpoint image generation unit 86 to generate a viewing viewpoint image of a synthesized 3D model viewed from a viewing position. In this case, the viewing position supplied from the viewing position detection device 27 (Fig. 1) is supplied to the viewing viewpoint image synthesis unit 87.

In the above-described first embodiment, the reproduction device 25 has acquired the 3D model data corresponding to all the viewing positions and displayed the 3D model image corresponding to the viewing positions supplied from the viewing position detection device 27, assuming that the viewing position of the viewer is unknown in advance.

However, in a case of chronologically displaying a 3D model image from a predetermined viewing position, the reproduction device 25 can request the distribution server 23 to transmit the 3D model data of only some of areas required for display from the viewing position and acquire and display the 3D model image.

### <4. Second Embodiment>

### <Configuration Example of Generation Device>

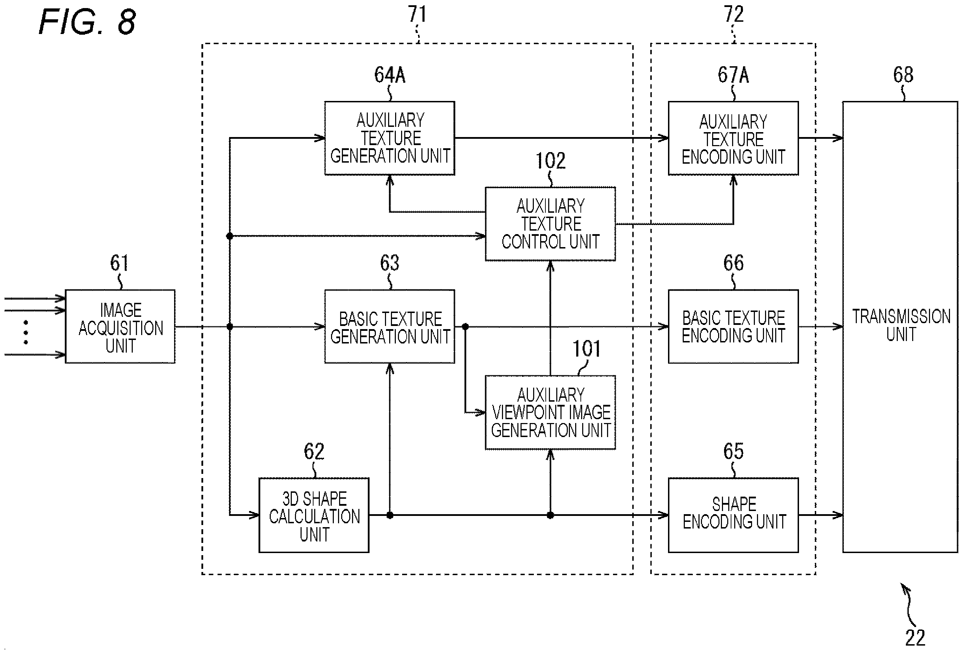

Fig. 8 is a block diagram illustrating a configuration example of a second embodiment of a generation device 22.

In Fig. 8, a portion corresponding to that in the first embodiment illustrated in Fig. 4 is denoted by the same reference numeral, and description of a portion common to the first embodiment is appropriately omitted and description will be given focusing on different portions.

To the generation device 22 according to the second embodiment in Fig. 8, an auxiliary viewpoint image generation unit 101 and an auxiliary texture control unit 102 are newly added. Furthermore, the auxiliary texture generation unit 64 and the auxiliary texture encoding unit 67 are changed to an auxiliary texture generation unit 64A and an auxiliary texture encoding unit 67A. The other points are similar to those in the first embodiment.

To the auxiliary viewpoint image generation unit 101, 3D shape data representing a 3D shape of an object is supplied from a 3D shape calculation unit 62, and mapping data that is two-dimensionally mapped texture information of the object is supplied from a basic texture generation unit 63.

The auxiliary viewpoint image generation unit 101 attaches a texture image of the mapping data to a surface of the 3D shape of the 3D shape data to generate a 3D model of the object. Then, the auxiliary viewpoint image generation unit 101 generates a capturing viewpoint image that is a 2D image of the generated 3D model of the object viewed from a position of each imaging device 21. The auxiliary viewpoint image generation unit 101 supplies the generated capturing viewpoint image to the auxiliary texture control unit 102.

In other words, the auxiliary viewpoint image generation unit 101 performs similar processing to the viewing viewpoint image generation unit 85 of the reproduction device 25 except that the position of the viewpoint to be generated is not a viewing position of a viewer and is the position of each imaging device 21. Note that, for the generation of the capturing viewpoint image, a general technique of 3D CG processing of calculating a 2D image from an auxiliary viewpoint of a 3D model, using the position of each imaging device 21 as the auxiliary viewpoint, can be used, which may not be similar processing to the viewing viewpoint image generation unit 85.

Since the generation of the mapping data and the 3D model of the object by the basic texture generation unit 63 requires a predetermined processing time, the auxiliary viewpoint image generation unit 101 may adopt a method of supplying a capturing viewpoint image delayed by several frames to the auxiliary texture control unit 102. Furthermore, an input image from the image acquisition unit 61 to the auxiliary texture generation unit 64A and an input image from the auxiliary viewpoint image generation unit 101 to the auxiliary texture control unit 102 may be adjusted to become images captured at the same timing by delaying the timing to input an image to the auxiliary texture generation unit 64A and the auxiliary texture control unit 102, using a frame memory, or the like.

To the auxiliary texture control unit 102, the capturing viewpoint image viewed from the position of each imaging device 21 is supplied from the auxiliary viewpoint image generation unit 101, and the captured image captured by each imaging device 21 is supplied from the image acquisition unit 61.

The auxiliary texture control unit 102 determines whether or not to encode an area image for each of one or more specific areas SP selected by the auxiliary texture generation unit 64A. Specifically, the auxiliary texture control unit 102 calculates a difference between the capturing viewpoint image generated by the auxiliary viewpoint image generation unit 101 and the actual captured image supplied from the image acquisition unit 61, for each of the one or more specific areas SP, and determines to encode the area image in a case where the difference is equal to or larger than a predetermined threshold. As the difference, for example, a difference absolute value sum of the capturing viewpoint image and the actual captured image, structural similarity (SSIM), or the like is used. The auxiliary texture control unit 102 instructs the auxiliary texture generation unit 64A to generate an area image of the specific area SP determined to be encoded. The auxiliary texture control unit 102 supplies a capturing viewpoint image of the specific area SP, of which the auxiliary texture control unit 102 has instructed the auxiliary texture generation unit 64A to generate an area image, to the auxiliary texture encoding unit 67A.

The auxiliary texture generation unit 64A generates the area image of the specific area SP for which an instruction on generation has been given by the auxiliary texture control unit 102, and supplies the area image and camera parameters of the imaging device 21 that has captured the area image to the auxiliary texture encoding unit 67A. Other points are similar to those of the auxiliary texture generation unit 64 of the first embodiment.

Note that the auxiliary texture generation unit 64A may select the specific area SP by a manual operation or automatically and supply information identifying the specific area SP to the auxiliary texture control unit 102, similarly to the first embodiment, or the auxiliary texture control unit 102 may perform the selection and supply the information to the auxiliary texture generation unit 64A instead of the auxiliary texture generation unit 64A. Furthermore, both the auxiliary texture generation unit 64A and the auxiliary texture control unit 102 may perform the selection.

To the auxiliary texture encoding unit 67A, the capturing viewpoint image of the specific area SP determined to generate the area image data by the auxiliary texture control unit 102 is supplied from the auxiliary texture control unit 102, and the area image of the specific area SP and the camera parameters are supplied from the auxiliary texture generation unit 64A.

The auxiliary texture encoding unit 67A encodes the area image of the specific area SP supplied from the auxiliary texture generation unit 64A by a predetermined encoding method and supplies resultant encoded area image data to a transmission unit 68. Here, the auxiliary texture encoding unit 67A may perform predictive encoding of using the capturing viewpoint image of the specific area SP supplied from the auxiliary texture control unit 102 as one of candidates of prediction images, and encoding a difference between the capturing viewpoint image and the area image supplied from the auxiliary texture generation unit 64A, or may perform encoding using a captured image before or after the capturing viewpoint image in a time direction as a prediction image similarly to the first embodiment. The auxiliary texture encoding unit 67A supplies the encoded area image data encoded using the prediction image to the transmission unit 68.

### <Configuration Example of Reproduction Device>

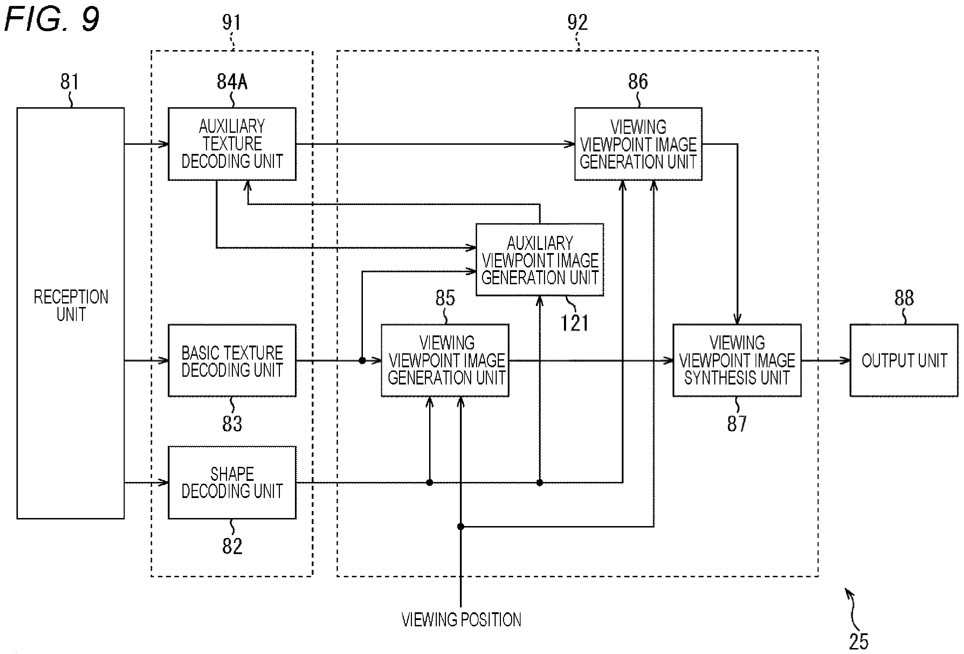

Fig. 9 is a block diagram illustrating a configuration example of the second embodiment of the reproduction device 25.

In Fig. 9, a portion corresponding to that in the first embodiment illustrated in Fig. 5 is denoted by the same reference numeral, and description of a portion common to the first embodiment is appropriately omitted and description will be given focusing on different portions.

To the reproduction device 25 according to the second embodiment in Fig. 9, an auxiliary viewpoint image generation unit 121 is newly added. Furthermore, the auxiliary texture decoding unit 84 is changed to an auxiliary texture decoding unit 84A. The other points are similar to those in the first embodiment.

To the auxiliary viewpoint image generation unit 121, external parameters of each imaging device 21 are supplied from the auxiliary texture decoding unit 84A. Furthermore, to the auxiliary viewpoint image generation unit 121, 3D shape data is supplied from a shape decoding unit 82 and mapping data is supplied from a basic texture decoding unit 83.

The auxiliary viewpoint image generation unit 121 attaches a texture image of the mapping data to a surface of the 3D shape of the 3D shape data to generate a 3D model of the object. Then, the auxiliary viewpoint image generation unit 121 generates a capturing viewpoint image that is a 2D image of the generated 3D model of the object viewed from the position of the imaging device 21 supplied from the auxiliary texture decoding unit 84A.

In other words, the auxiliary viewpoint image generation unit 121 performs similar processing to the viewing viewpoint image generation unit 85 except that the position of a viewpoint to be generated is not a viewing position of a viewer and is the position of each imaging device 21. The auxiliary viewpoint image generation unit 121 supplies generated one or more capturing viewpoint images to the auxiliary texture decoding unit 84A.

The auxiliary texture decoding unit 84A supplies the external parameters of the imaging device 21 included in the area image data to the auxiliary viewpoint image generation unit 121. The auxiliary texture decoding unit 84A decodes the encoded area image data, using the capturing viewpoint image supplied from the auxiliary viewpoint image generation unit 121 as one of candidates of prediction images, to obtain a difference image. Then, the auxiliary texture decoding unit 84A generates one or more area images similar to the first embodiment from the difference image obtained by decoding and an image (the capturing viewpoint image or an image before or after in the time direction) used as a prediction image, and supplies the one or more area images to the viewing viewpoint image generation unit 86.

### <5. Flowchart of Second Embodiment>

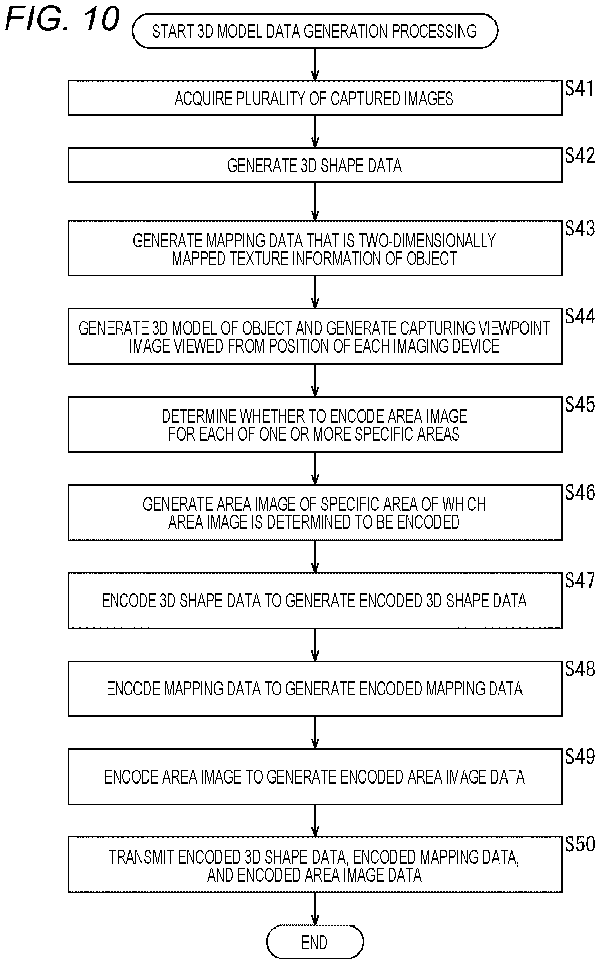

3D model data generation processing by the generation device 22 according to the second embodiment will be described with reference to the flowchart in Fig. 10.

Since steps S41 to S43 are similar to steps S1 to S3 in Fig. 6 in the first embodiment, description thereof is omitted.

In step S44, the auxiliary viewpoint image generation unit 101 generates a 3D model of an object and generates a capturing viewpoint image of the generated 3D model viewed from the position of each imaging device 21. More specifically, the auxiliary viewpoint image generation unit 101 attaches a texture image of the mapping data to a surface of the 3D shape of the 3D shape data to generate a 3D model of the object. Then, the auxiliary viewpoint image generation unit 101 generates a capturing viewpoint image that is a 2D image of the generated 3D model of the object viewed from the position of each imaging device 21. The generated capturing viewpoint image is supplied to the auxiliary texture control unit 102.

In step S45, the auxiliary texture control unit 102 determines whether or not to encode an area image for each of one or more specific areas SP selected by the auxiliary texture generation unit 64A. Specifically, the auxiliary texture control unit 102 calculates a difference between the capturing viewpoint image generated by the auxiliary viewpoint image generation unit 101 and the actual captured image supplied from the image acquisition unit 61, for each of the one or more specific areas SP, and determines to encode the area image in a case where the difference is equal to or larger than a predetermined threshold. The auxiliary texture control unit 102 instructs the auxiliary texture generation unit 64A to generate an area image of the specific area SP determined to be encoded. The auxiliary texture control unit 102 supplies a capturing viewpoint image of the specific area SP, of which the auxiliary texture control unit 102 has instructed the auxiliary texture generation unit 64A to generate an area image, to the auxiliary texture encoding unit 67A.

In step S46, the auxiliary texture generation unit 64A generates an area image of the specific area SP, of which the captured image is determined to be encoded. Specifically, the auxiliary texture generation unit 64A generates an area image of the specific area SP for which an instruction on generation has been given by the auxiliary texture control unit 102. Then, the area image of the specific area SP as auxiliary texture and the camera parameters of the imaging device 21 that has captured the area image are supplied as area image data to the auxiliary texture encoding unit 67A. The camera parameters may be transmitted for each frame on a constant basis or may be transmitted only at the time of change after transmitted in a first frame of a moving image.

Since steps S47 and S48 are similar to steps S5 and S6 in Fig. 6 in the first embodiment, description thereof is omitted.

In step S49, the auxiliary texture encoding unit 67A encodes the area image of the specific area SP supplied from the auxiliary texture generation unit 64A by a predetermined encoding method to generate encoded area image data and supplies the encoded area image data to the transmission unit 68. Here, a the auxiliary texture encoding unit 67A can perform predictive encoding of encoding the area image supplied from the auxiliary texture generation unit 64A, using the capturing viewpoint image of the specific area SP supplied from the auxiliary texture control unit 102 as one of candidates of prediction images. The camera parameters of the imaging device 21 that has captured the area image are stored as metadata in the encoded area image data, for example.

In step S50, the transmission unit 68 transmits the encoded 3D shape data, the encoded mapping data, and the encoded area image data to the distribution server 23.

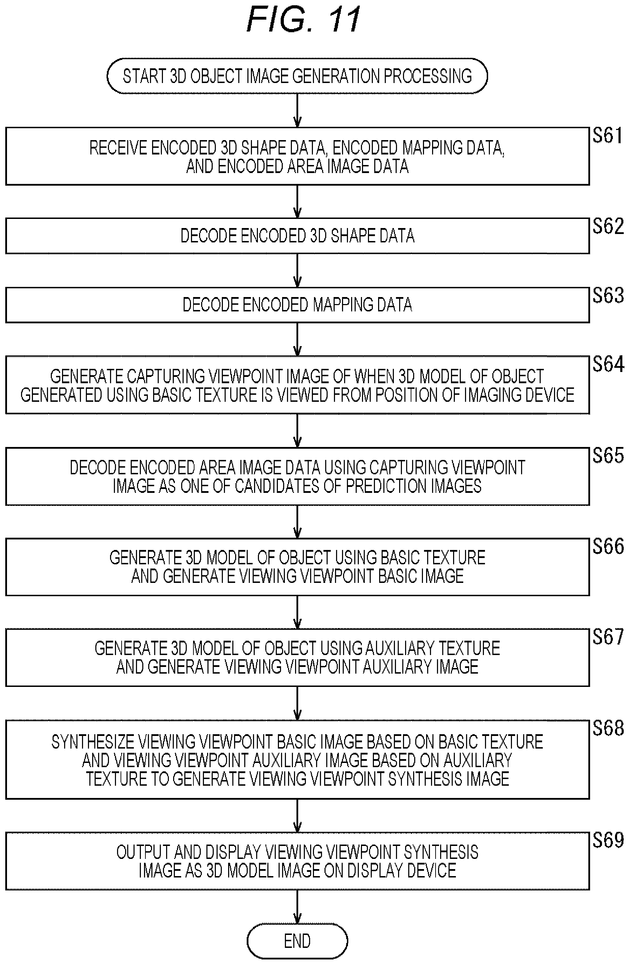

Next, 3D model image generation processing by the reproduction device 25 according to the second embodiment will be described with reference to the flowchart in Fig. 11.

Since steps S61 to S63 are similar to steps S21 to S23 in Fig. 6 in the first embodiment, description thereof is omitted.

In step S64, the auxiliary viewpoint image generation unit 121 generates a 3D model of an object, using basic texture, and generates a capturing viewpoint image of the generated 3D model viewed from the position of each imaging device 21. That is, the external parameters of the imaging device 21 included in the area image data are supplied from the auxiliary texture decoding unit 84A to the auxiliary viewpoint image generation unit 121. The auxiliary viewpoint image generation unit 121 attaches a texture image of the mapping data to a surface of the 3D shape of the 3D shape data to generate a 3D model of the object. Then, the auxiliary viewpoint image generation unit 121 generates a capturing viewpoint image that is a 2D image of the generated 3D model of the object viewed from the position of the imaging device 21. The generated capturing viewpoint image is supplied to the auxiliary texture decoding unit 84A.

In step S65, the auxiliary texture decoding unit 84A decodes the encoded area image data, using the capturing viewpoint image supplied from the auxiliary viewpoint image generation unit 121 as one of candidates of prediction images, to obtain a difference image. Then, the auxiliary texture decoding unit 84A generates one or more area images similar to the first embodiment from the difference image obtained by decoding and the image used as a prediction image, and supplies the one or more area images to the viewing viewpoint image generation unit 86.

Since steps S66 to S69 are similar to steps S25 to S28 in Fig. 6 in the first embodiment, description thereof is omitted.

According to the above-described second embodiment of the image processing system 1, the capturing viewpoint image at the viewpoint of the imaging device 21 that is the same as the area image of the specific area SP generated as auxiliary texture is generated in the generation device 22, and the area image is generated only for the specific area SP having a large difference between the capturing viewpoint image and the actual captured image, and is transmitted to the distribution server 23.

The points in generating a viewing viewpoint basic image of when the 3D model of the object generated using basic texture is viewed from a viewing position, generating a viewing viewpoint auxiliary image of when the 3D model of the object generated using auxiliary texture is viewed from the viewing position, and synthesizing the viewing viewpoint basic image and the viewing viewpoint auxiliary image to generate a viewing viewpoint synthesis image in the reproduction device 25 are similar to the first embodiment. However, the area image data to be transmitted is data encoded using the capturing viewpoint image as one of candidates of prediction images.

In an area where a basic texture image is largely broken due to poor shape accuracy, low basic texture resolution, or the like, a large difference is created between the captured image captured by the imaging device 21 and the capturing viewpoint image created from the basic texture image. For such an area, generation of an image using unbroken auxiliary texture has a great effect. Therefore, by predicting an area where the difference between the captured image and the capturing viewpoint image is large (an area where an image is broken) and generating an area image, the image quality of a reproduced display image can be efficiently improved.

Furthermore, an area where the difference is small (an area where the basic texture is sufficient) has a small effect of the auxiliary texture image. Therefore, an image is not generated for such an area and is not transmitted, so that a data amount can be reduced and compression efficiency can be improved.

### (Modification)

The above-described second embodiment can be modified as follows.

In the above-described second embodiment, (the difference of) the area image has not been transmitted for the specific area SP having a small difference between the capturing viewpoint image and the actual captured image. However, an area image may be generated and transmitted regardless of the magnitude of the difference. Even in this case, predictive encoding of encoding the difference is performed. Therefore, a high-quality free viewpoint image can be implemented while suppressing a transfer data amount and a calculation amount.

In the above-described second embodiment, in the case where the difference between the capturing viewpoint image in the specific area SP and the actual captured image is large, the area size of the specific area SP may be expanded, or the number of specific areas SP may be increased, for example, by detecting another area having a large difference and adding the detected area as a specific area SP. Thereby, the image quality at the time of reproduction can be further improved.

### <6. Third Embodiment>

### <Configuration Example of Generation Device>

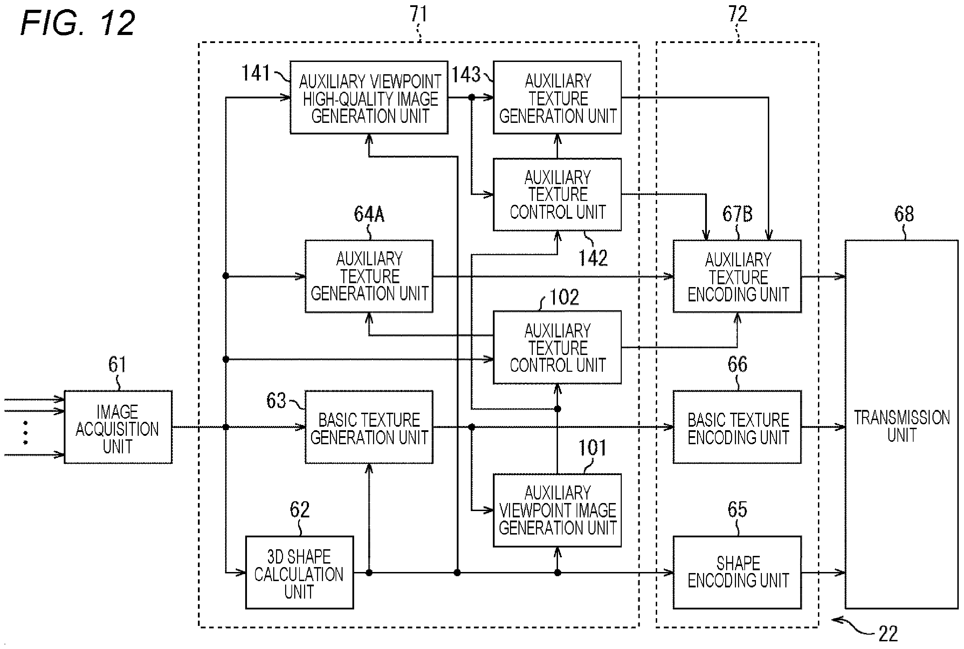

Fig. 12 is a block diagram illustrating a configuration example of a third embodiment of a generation device 22.

In Fig. 12, a portion corresponding to that in the second embodiment illustrated in Fig. 8 is denoted by the same reference numeral, and description of a portion common to the second embodiment is appropriately omitted and description will be given focusing on different portions.

To a generation device 22 according to the third embodiment in Fig. 12, an auxiliary viewpoint high-quality image generation unit 141, an auxiliary texture control unit 142, and an auxiliary texture generation unit 143 are newly added. Furthermore, the auxiliary texture encoding unit 67A is changed to an auxiliary texture encoding unit 67B. The other points are similar to those in the second embodiment.

To the auxiliary viewpoint high-quality image generation unit 141, a plurality of captured images is supplied from an image acquisition unit 61, and 3D shape data representing a 3D shape of an object is supplied from a 3D shape calculation unit 62.

The auxiliary viewpoint high-quality image generation unit 141 generates a high-quality captured image with improved characteristics as compared with a captured image captured by an imaging device 21 alone. In other words, the auxiliary viewpoint high-quality image generation unit 141 generates a viewpoint synthesis image in which the plurality of captured images supplied from the image acquisition unit 61 is synthesized, thereby generating the high-quality captured image. For example, the auxiliary viewpoint high-quality image generation unit 141 generates, as the high-quality captured image, a high-resolution captured image with improved resolution such as full HD to 4 k by integrating sampling points having different spatial phases as compared with the captured image of the imaging device 21 alone, a low-noise captured image with reduced noise, a wide dynamic range captured image with an expanded dynamic range, a wide-angle captured image with an expanded angle of view (FOV), or the like.

Then, the auxiliary viewpoint high-quality image generation unit 141 attaches the generated high-quality captured image to a surface of the 3D shape of the 3D shape data to generate a high-quality 3D model of the object. Then, the auxiliary viewpoint high-quality image generation unit 141 generates a high-quality capturing viewpoint image that is a 2D image of the generated high-quality 3D model of the object viewed from the position of each imaging device 21. The auxiliary viewpoint high-quality image generation unit 141 supplies the generated high-quality capturing viewpoint image to the auxiliary texture control unit 142 and the auxiliary texture generation unit 143.

The auxiliary texture control unit 142 acquires the high-quality capturing viewpoint image from the auxiliary viewpoint high-quality image generation unit 141 and acquires the capturing viewpoint image viewed from the position of each imaging device 21 from an auxiliary viewpoint image generation unit 101.

The auxiliary texture control unit 142 determines whether or not to encode the high-quality capturing viewpoint image for each of one or more specific areas SP. Specifically, the auxiliary texture control unit 142 calculates a difference between the capturing viewpoint image generated by the auxiliary viewpoint image generation unit 101 and the high-quality capturing viewpoint image generated by the auxiliary viewpoint high-quality image generation unit 141, for each of the one or more specific areas SP, and determines to encode the high-quality capturing viewpoint image in a case where the difference is equal to or larger than a predetermined threshold. The auxiliary texture control unit 142 instructs the auxiliary texture generation unit 143 to generate a high-quality capturing viewpoint image of the specific area SP determined to be encoded. The auxiliary texture control unit 142 supplies a capturing viewpoint image of the specific area SP, of which the auxiliary texture control unit 142 has instructed the auxiliary texture generation unit 143 to generate a high-quality capturing viewpoint image, to the auxiliary texture encoding unit 67B. Note that, regarding the one or more specific areas SP, information of the specific areas SP determined by an auxiliary texture generation unit 64A may be acquired or may be manually or automatically determined by the auxiliary texture generation unit 143 itself separately from the auxiliary texture generation unit 64A.

The auxiliary texture generation unit 143 generates a high-quality area image from the high-quality capturing viewpoint image supplied from the auxiliary viewpoint high-quality image generation unit 141, regarding the specific area SP for which an instruction on generation has been given by the auxiliary texture control unit 142, and supplies the high-quality area image and camera parameters of the imaging device 21 corresponding to the high-quality area image to the auxiliary texture encoding unit 67B. Other points are similar to those of the auxiliary texture generation unit 64A of the second embodiment.

The auxiliary texture encoding unit 67B performs predictive encoding for the high-quality area image of the specific area SP supplied from the auxiliary texture generation unit 143, using the capturing viewpoint image supplied from the auxiliary texture control unit 142 as one of candidates of prediction images, and supplies resultant encoded area image data to a transmission unit 68.

Furthermore, the auxiliary texture encoding unit 67B performs predictive encoding of encoding an area image supplied from the auxiliary texture generation unit 64A, using the capturing viewpoint image of the specific area SP supplied from an auxiliary texture control unit 102 as one of candidates of prediction images, and supplies resultant encoded area image data to the transmission unit 68.

That is, the auxiliary texture encoding unit 67B performs processing of encoding the high-quality area image, in addition to the processing performed by the auxiliary texture encoding unit 67A.

A reproduction device 25 according to the third embodiment can be implemented by a similar configuration to the second embodiment.

### <7. Flowchart of Third Embodiment>

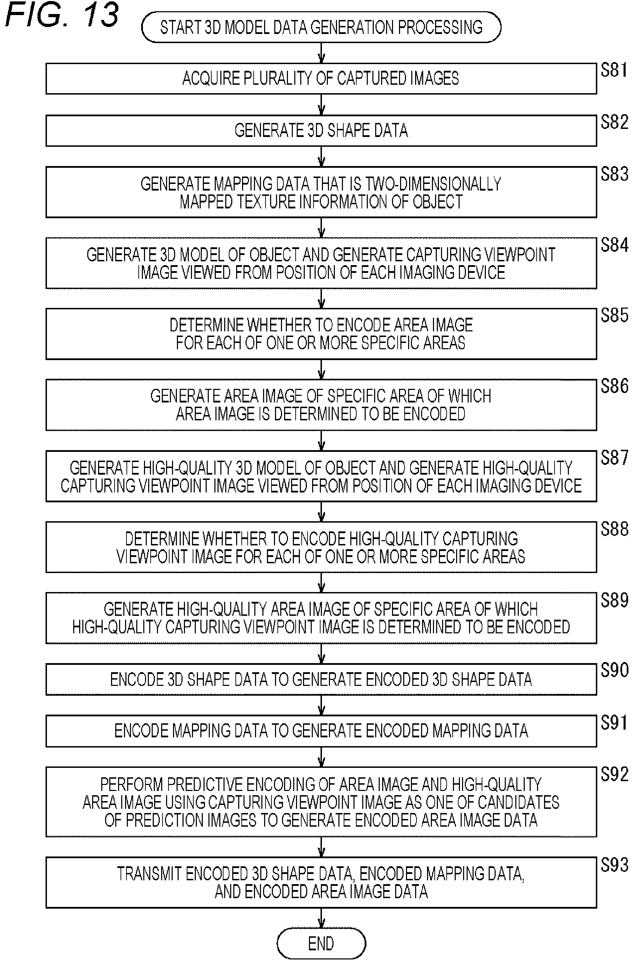

3D model data generation processing by the generation device 22 according to the third embodiment will be described with reference to the flowchart in Fig. 13.

Since steps S81 to S86 are similar to steps S41 to S46 in Fig. 10 in the second embodiment, description thereof is omitted. Note that a generated capturing viewpoint image is also supplied to the auxiliary texture control unit 142 in addition to the auxiliary texture control unit 102 in step S84 corresponding to step S44 in Fig. 10.

In step S87, the auxiliary viewpoint high-quality image generation unit 141 generates a high-quality 3D model of an object, and generates a high-quality capturing viewpoint image of the generated high-quality 3D model viewed from the position of each imaging device 21. Specifically, the auxiliary viewpoint high-quality image generation unit 141 synthesizes a plurality of captured images to generate a high-quality captured image with improved characteristics as compared with a captured image captured by an imaging device 21 alone. Then, the auxiliary viewpoint high-quality image generation unit 141 attaches the generated high-quality captured image to a surface of the 3D shape of the 3D shape data to generate a high-quality 3D model of the object. Moreover, the auxiliary viewpoint high-quality image generation unit 141 generates a high-quality capturing viewpoint image that is a 2D image of the generated high-quality 3D model of the object viewed from the position of each imaging device 21. The generated high-quality capturing viewpoint image is supplied to the auxiliary texture control unit 142 and the auxiliary texture generation unit 143.

In step S88, the auxiliary texture control unit 142 determines whether or not to encode the high-quality capturing viewpoint image for each of one or more specific areas SP selected by the auxiliary texture generation unit 143. Specifically, the auxiliary texture control unit 142 calculates a difference between the capturing viewpoint image generated by the auxiliary viewpoint image generation unit 101 and the high-quality capturing viewpoint image supplied from the auxiliary viewpoint high-quality image generation unit 141, for each of the one or more specific areas SP, and determines to encode the high-quality capturing viewpoint image in a case where the difference is equal to or larger than a predetermined threshold. The auxiliary texture control unit 142 instructs the auxiliary texture generation unit 143 to generate a high-quality capturing viewpoint image of the specific area SP determined to be encoded. The auxiliary texture control unit 142 supplies a capturing viewpoint image of the specific area SP, of which the auxiliary texture control unit 142 has instructed the auxiliary texture generation unit 143 to generate a high-quality capturing viewpoint image, to the auxiliary texture encoding unit 67B.

In step S89, the auxiliary texture generation unit 143 generates a high-quality area image of the specific area SP, of which the high-quality capturing viewpoint image is determined to be encoded. Specifically, the auxiliary texture generation unit 143 selects and cuts the specific area SP from the high-quality capturing viewpoint image, regarding the specific area SP for which an instruction on generation has been given by the auxiliary texture control unit 142, thereby generating the high-quality area image of the specific area SP. Then, the high-quality area image of the specific area SP as auxiliary texture and the camera parameters of the imaging device 21 corresponding to the high-quality area image are supplied as area image data to the auxiliary texture encoding unit 67B.

Since steps S90 and S91 are similar to steps S47 and S48 in Fig. 10 in the second embodiment, description thereof is omitted.

In step S92, the auxiliary texture encoding unit 67B performs predictive encoding of encoding the area image supplied from the auxiliary texture generation unit 64A, using the capturing viewpoint image of the specific area SP supplied from the auxiliary texture control unit 102 as one of candidates of prediction images, and predictive encoding of encoding the high-quality area image supplied from the auxiliary texture generation unit 143, using the capturing viewpoint image of the specific area SP supplied from the auxiliary texture control unit 142 as one of candidates of prediction images, to generate encoded area image data, and supplies the encoded area image data to the transmission unit 68. The camera parameters of the imaging device 21 are stored as metadata in the encoded area image data, for example.

In step S93, the transmission unit 68 transmits encoded 3D shape data, encoded mapping data, and the encoded area image data to the distribution server 23.

Since 3D model image generation processing by the reproduction device 25 of the third embodiment can be executed in the same manner as the 3D model image generation processing of the second embodiment described with reference to Fig. 11, description thereof is omitted. That is, the auxiliary texture decoding unit 84A decodes the capturing viewpoint image as one of candidates of prediction images regardless of whether the image from which the difference image is generated is the area image or the high-quality area image, thereby generating an area image or a high-quality area image.

According to the above-described first to third embodiments of the image processing system 1, the high-quality area image obtained by cutting the specific area SP of the high-quality captured image (high-quality capturing viewpoint image) with improved characteristics as compared with the captured image captured by the imaging device 21 alone can be reproduced and displayed on the reproduction device 25 side, and the image quality of the display image can be improved.

In a case where the high-quality captured image is a high-resolution captured image with improved resolution by integrating sampling points having different spatial phases, for example, improvement of the resolution can be expected.

In a case where the high-quality captured image is a wide dynamic range captured image generated by integrating images having different exposure conditions, for example, an increase in a dynamic range can be expected.

In a case where the high-quality captured image is a low-noise captured image with reduced noise by integrating signals (such as IR images) having different exposure or sensitivity characteristics, for example, improvement of an SN ratio can be expected.

In a case where the high-quality captured image is a wide-angle captured image image in which an angle of view (FOV) is increased while eliminating redundancy by integrating images from the imaging devices 21 at different angles of view, postures, or positions, for example, reproduction of a wider-angle image can be expected.

### (Modification)

The above-described third embodiment can be modified as follows.

In the above-described third embodiment, (the difference of) the high-quality capturing viewpoint image has not been transmitted for the specific area having a small difference between the capturing viewpoint image and the high-quality capturing viewpoint image. However, a high-quality capturing viewpoint image may be generated and transmitted regardless of the magnitude of the difference. Even in this case, predictive encoding of encoding the difference is performed. Therefore, a high-quality free viewpoint image can be implemented while suppressing a transfer data amount and a calculation amount.

In the above-described third embodiment, the auxiliary viewpoint high-quality image generation unit 141 has generated the high-quality capturing viewpoint image viewed from the position of the imaging device 21, and the auxiliary texture generation unit 143 has generated the high-quality area image of the specific area SP. However, the auxiliary viewpoint high-quality image generation unit 141 may generate a high-quality capturing viewpoint image viewed from an auxiliary viewpoint other than the position of the imaging device 21, and the auxiliary texture generation unit 143 may generate a high-quality area image of a specific area SP of the high-quality capturing viewpoint image. In this case, the auxiliary viewpoint image generation unit 101 generates a capturing viewpoint image from the same viewpoint as the auxiliary viewpoint from which the auxiliary viewpoint high-quality image generation unit 141 generates the high-quality capturing viewpoint image, and supplies the generated capturing viewpoint image to the auxiliary texture control unit 142. By integrating a texture image with the 3D model of the object from a more effective auxiliary viewpoint, reduction of the area image of the specific area SP transmitted as auxiliary texture and the transfer data amount can be expected.

### <8. Configuration Example of Computer>

The above-described series of processing can be executed by hardware or software. In the case of executing the series of processing by software, a program that configures the software is installed in a computer. Here, the computer includes a microcomputer incorporated in dedicated hardware, and a general-purpose personal computer and the like capable of executing various functions by installing various programs, for example.

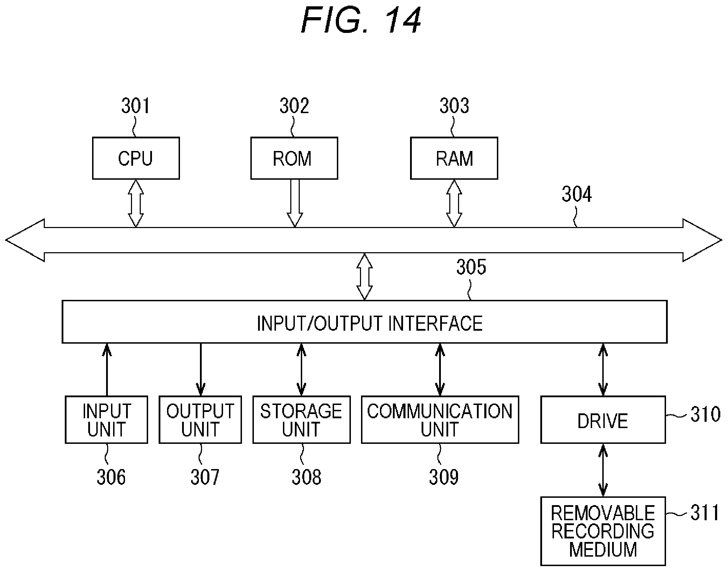

Fig. 14 is a block diagram illustrating a configuration example of hardware of a computer that executes the above-described series of processing by a program.

In a computer, a central processing unit (CPU) 301, a read only memory (ROM) 302, and a random access memory (RAM) 303 are mutually connected by a bus 304.

Moreover, an input/output interface 305 is connected to the bus 304. An input unit 306, an output unit 307, a storage unit 308, a communication unit 309, and a drive 310 are connected to the input/output interface 305.

The input unit 306 includes, for example, an operation button, a keyboard, a mouse, a microphone, a touch panel, an input terminal, and the like. The output unit 307 includes, for example, a display, a speaker, an output terminal, and the like. The storage unit 308 includes, for example, a hard disk, a RAM disk, a nonvolatile memory, and the like. The communication unit 309 includes a network interface, and the like. The drive 310 drives a removable recording medium 311 such as a magnetic disk, an optical disk, a magneto-optical disk, or a semiconductor memory.

In the computer configured as described above, the CPU 301 loads a program, for example, stored in the storage unit 308 into the RAM 303 and executes the program via the input/output interface 305 and the bus 304, thereby performing the above-described series of processing. Furthermore, the RAM 303 appropriately stores data and the like necessary for the CPU 1301 to execute the various types of processing.

The program to be executed by the computer (CPU 301) can be recorded on the removable recording medium 311 as a package medium or the like, for example, and provided. Furthermore, the program can be provided via a wired or wireless transmission medium such as a local area network, the Internet, or digital satellite broadcast.

In the computer, the program can be installed to the storage unit 308 via the input/output interface 305 by attaching the removable recording medium 311 to the drive 310. Furthermore, the program can be received by the communication unit 309 via a wired or wireless transmission medium and installed in the storage unit 308. Other than the above method, the program can be installed in the ROM 302 or the storage unit 308 in advance.

Note that the program executed by the computer may be a program processed in chronological order according to the order described in the present specification or may be a program executed in parallel or at necessary timing such as when a call is made.

In the present specification, the steps described in the flowcharts can be chronologically executed according to the described order. However, the steps are not necessarily chronologically processed and may be executed in parallel or at necessary timing such as when called.

In the present specification, the term "system" means a group of a plurality of configuration elements (devices, modules (parts), and the like), and whether or not all the configuration elements are in the same casing is irrelevant. Therefore, a plurality of devices housed in separate housings and connected via a network, and one device that houses a plurality of modules in one casing are both systems.

Embodiments of the present technology are not limited to the above-described embodiments, and various modifications can be made without departing from the gist of the present technology.

For example, an embodiment of a combination of all or some of the above-described plurality of embodiments can be employed.

For example, in the present technology, a configuration of cloud computing in which one function is shared and processed in cooperation by a plurality of devices via a network can be adopted.

Furthermore, the steps described in the above-described flowcharts can be executed by one device or can be shared and executed by a plurality of devices.

Moreover, in the case where a plurality of processes is included in one step, the plurality of processes included in the one step can be executed by one device or can be shared and executed by a plurality of devices.

Note that the effects described in the present specification are merely illustrative and are not restrictive, and effects other than the effects described in the present specification may be exhibited.

Note that the present technology can also have the following configurations.
(1) An image processing apparatus including:
   a generation unit configured to generate 3D shape data representing a 3D shape of an object, mapping data that is two-dimensionally mapped texture information of the object, and area image data of a specific area of one or more captured images obtained by capturing the object from one or more viewpoint positions.
(2) The image processing apparatus according to (1), in which
   the mapping data is data by one of UV mapping, cube mapping, parallel projection mapping, or cylindrical coordinate projection mapping.
(3) The image processing apparatus according to (1) or (2), in which
   the generation unit detects the specific area by recognition processing, and generates the area image data of the detected specific area.
(4) The image processing apparatus according to any one of (1) to (3), further including:
   a viewpoint image generation unit configured to synthesize and generate a viewpoint image viewed from a same viewpoint as the viewpoint position from the 3D shape data and the mapping data; and
   a control unit configured to control the generation of the area image data on the basis of a difference between the viewpoint image and the captured image.
(5) The image processing apparatus according to (4), further including:
   an encoding unit configured to encode the difference.
(6) The image processing apparatus according to any one of (1) to (5), in which
   the generation unit generates a viewpoint synthesis image obtained by synthesizing a plurality of the captured images, and generates an image of the specific area from the viewpoint synthesis image.
(7) The image processing apparatus according to (6), in which
   the viewpoint synthesis image is an image having higher resolution than the captured images.
(8) The image processing apparatus according to any one of (1) to (7), further including:
   a transmission unit configured to transmit the 3D shape data, the mapping data, and the area image data.
(9) The image processing apparatus according to any one of (1) to (8), further including:
   an encoding unit configured to encode the 3D shape data, the mapping data, and the area image data.
(10) An image processing method including:
   by an image processing apparatus,
   generating 3D shape data representing a 3D shape of an object, mapping data that is two-dimensionally mapped texture information of the object, and area image data of a specific area of one or more captured images obtained by capturing the object from one or more viewpoint positions.
(11) An image processing apparatus including:
   a synthesis unit configured to synthesize 3D shape data representing a 3D shape of an object, mapping data that is two-dimensionally mapped texture information of the object, and area image data of a specific area of one or more captured images obtained by capturing the object from one or more viewpoint positions to generate a viewing viewpoint synthesis image that is an image of a 3D model of the object viewed from a predetermined viewing position.
(12) The image processing apparatus according to (11), in which
   the synthesis unit synthesizes a first viewing viewpoint image of a first 3D model of the object viewed from the predetermined viewing position, the first 3D model being generated from the 3D shape data and the mapping data, and a second viewing viewpoint image of a second 3D model of the object viewed from the predetermined viewing position, the second 3D model being generated from the 3D shape data and the area image data, to generate the viewing viewpoint synthesis image.
(13) The image processing apparatus according to (11), in which
   the synthesis unit generates a first 3D model of the object from the 3D shape data and the mapping data and generates a second 3D model of the object from the 3D shape data and the area image data, and generates the viewing viewpoint synthesis image of a 3D model viewed from the predetermined viewing position, the 3D model being obtained after the first 3D model and the second 3D model are synthesized.
(14) The image processing apparatus according to any one of (11) to (13), further including:
   the synthesis unit synthesizes a viewing viewpoint auxiliary synthesis image obtained by synthesizing a plurality of specific area images that is images of a plurality of the specific areas by weighted addition and a viewing viewpoint basic image based on the mapping data to generate the viewing viewpoint synthesis image.
(15) The image processing apparatus according to any one of (11) to (14), in which
   the synthesis unit synthesizes the specific area image having highest reliability in a plurality of specific area images that is images of a plurality of the specific areas with a viewing viewpoint basic image based on the mapping data to generate the viewing viewpoint synthesis image.
(16) The image processing apparatus according to any one of (11) to (15), further including:
   a viewpoint image generation unit configured to generate a viewpoint image from a same viewpoint as the viewpoint position from the 3D shape data and the mapping data; and
   a decoding unit configured to decode the area image data obtained by encoding a difference between the viewpoint image of the specific area and the captured image, using the viewpoint image.
(17) The image processing apparatus according to (16), further including:
   a first viewing viewpoint image generation unit configured to generate a viewing viewpoint basic image of a 3D model of the object viewed from the predetermined viewing position, the 3D model being generated from the 3D shape data and the mapping data; and
   a second viewing viewpoint image generation unit configured to generate a viewing viewpoint auxiliary image, using the difference obtained by decoding the area image data and the viewpoint image, in which
   the synthesis unit synthesizes the viewing viewpoint basic image and the viewing viewpoint auxiliary image to generate the viewing viewpoint synthesis image.
(18) The image processing apparatus according to any one of (11) to (17), further including:
   a reception unit configured to receive the 3D shape data, the mapping data, and the area image data.
(19) The image processing apparatus according to any one of (11) to (18), further including:
   a decoding unit configured to decode the encoded 3D shape data, the encoded mapping data, and the encoded area image data.
(20) An image processing method including:
   by an image processing apparatus,
   synthesizing 3D shape data representing a 3D shape of an object, mapping data that is two-dimensionally mapped texture information of the object, and area image data of a specific area of one or more captured images obtained by capturing the object from one or more viewpoint positions to generate a viewing viewpoint synthesis image of a 3D model of the object viewed from a predetermined viewing position.

### REFERENCE SIGNS LIST

- 1: Image processing system
- 21: Imaging device
- 22: Generation device
- 23: Distribution server
- 25: Reproduction device
- 26: Display device
- 27: Viewing position detection device
- 62: 3D shape calculation unit
- 63: Basic texture generation unit
- 64: Auxiliary texture generation unit
- 65: Shape encoding unit
- 66: Basic texture encoding unit
- 67: Auxiliary texture encoding unit
- 71: Generation unit
- 72: Encoding unit
- 82: Shape decoding unit
- 83: Basic texture decoding unit
- 84: Auxiliary texture decoding unit
- 85: Viewing viewpoint image generation unit
- 86: Viewing viewpoint image generation unit
- 87: Viewing viewpoint image synthesis unit
- 91: Decoding unit
- 92: Synthesis unit
- 101: Auxiliary viewpoint image generation unit
- 102: Auxiliary texture control unit
- 121: Auxiliary viewpoint image generation unit
- 141: Auxiliary viewpoint high-quality image generation unit
- 142: Auxiliary texture control unit
- 143: Auxiliary texture generation unit
- 301: CPU
- 302: ROM
- 303: RAM
- 306: Input unit
- 307: Output unit
- 308: Storage unit
- 309: Communication unit
- 310: Drive

## Claims

1. An image processing apparatus comprising:
a generation unit configured to generate 3D shape data representing a 3D shape of an object, mapping data that is two-dimensionally mapped texture information of the object, and area image data of a specific area of one or more captured images obtained by capturing the object from one or more viewpoint positions.

2. The image processing apparatus according to claim 1, wherein
the mapping data is data by one of UV mapping, cube mapping, parallel projection mapping, or cylindrical coordinate projection mapping.

3. The image processing apparatus according to claim 1, wherein
the generation unit detects the specific area by recognition processing, and generates the area image data of the detected specific area.

4. The image processing apparatus according to claim 1, further comprising:
a viewpoint image generation unit configured to synthesize and generate a viewpoint image viewed from a same viewpoint as the viewpoint position from the 3D shape data and the mapping data; and
a control unit configured to control the generation of the area image data on a basis of a difference between the viewpoint image and the captured image.

5. The image processing apparatus according to claim 4, further comprising:
an encoding unit configured to encode the difference.

6. The image processing apparatus according to claim 1, wherein
the generation unit generates a viewpoint synthesis image obtained by synthesizing a plurality of the captured images, and generates an image of the specific area from the viewpoint synthesis image.

7. The image processing apparatus according to claim 6, wherein
the viewpoint synthesis image is an image having higher resolution than the captured images.

8. The image processing apparatus according to claim 1, further comprising:
a transmission unit configured to transmit the 3D shape data, the mapping data, and the area image data.

9. The image processing apparatus according to claim 1, further comprising:
an encoding unit configured to encode the 3D shape data, the mapping data, and the area image data.

10. An image processing method comprising:
by an image processing apparatus,
generating 3D shape data representing a 3D shape of an object, mapping data that is two-dimensionally mapped texture information of the object, and area image data of a specific area of one or more captured images obtained by capturing the object from one or more viewpoint positions.

11. An image processing apparatus comprising:
a synthesis unit configured to synthesize 3D shape data representing a 3D shape of an object, mapping data that is two-dimensionally mapped texture information of the object, and area image data of a specific area of one or more captured images obtained by capturing the object from one or more viewpoint positions to generate a viewing viewpoint synthesis image that is an image of a 3D model of the object viewed from a predetermined viewing position.

12. The image processing apparatus according to claim 11, wherein
the synthesis unit synthesizes a first viewing viewpoint image of a first 3D model of the object viewed from the predetermined viewing position, the first 3D model being generated from the 3D shape data and the mapping data, and a second viewing viewpoint image of a second 3D model of the object viewed from the predetermined viewing position, the second 3D model being generated from the 3D shape data and the area image data, to generate the viewing viewpoint synthesis image.

13. The image processing apparatus according to claim 11, wherein
the synthesis unit generates a first 3D model of the object from the 3D shape data and the mapping data and generates a second 3D model of the object from the 3D shape data and the area image data, and generates the viewing viewpoint synthesis image of a 3D model viewed from the predetermined viewing position, the 3D model being obtained after the first 3D model and the second 3D model are synthesized.

14. The image processing apparatus according to claim 11, wherein
the synthesis unit synthesizes a viewing viewpoint auxiliary synthesis image obtained by synthesizing a plurality of specific area images that is images of a plurality of the specific areas by weighted addition and a viewing viewpoint basic image based on the mapping data to generate the viewing viewpoint synthesis image.

15. The image processing apparatus according to claim 11, wherein
the synthesis unit synthesizes the specific area image having highest reliability in a plurality of specific area images that is images of a plurality of the specific areas with a viewing viewpoint basic image based on the mapping data to generate the viewing viewpoint synthesis image.

16. The image processing apparatus according to claim 11, further comprising:
a viewpoint image generation unit configured to generate a viewpoint image from a same viewpoint as the viewpoint position from the 3D shape data and the mapping data; and
a decoding unit configured to decode the area image data obtained by encoding a difference between the viewpoint image of the specific area and the captured image, using the viewpoint image.

17. The image processing apparatus according to claim 16, further comprising:
a first viewing viewpoint image generation unit configured to generate a viewing viewpoint basic image of a 3D model of the object viewed from the predetermined viewing position, the 3D model being generated from the 3D shape data and the mapping data; and
a second viewing viewpoint image generation unit configured to generate a viewing viewpoint auxiliary image, using the difference obtained by decoding the area image data and the viewpoint image, wherein
the synthesis unit synthesizes the viewing viewpoint basic image and the viewing viewpoint auxiliary image to generate the viewing viewpoint synthesis image.

18. The image processing apparatus according to claim 11, further comprising:
a reception unit configured to receive the 3D shape data, the mapping data, and the area image data.

19. The image processing apparatus according to claim 11, further comprising:
a decoding unit configured to decode the encoded 3D shape data, the encoded mapping data, and the encoded area image data.

20. An image processing method comprising:
by an image processing apparatus,
synthesizing 3D shape data representing a 3D shape of an object, mapping data that is two-dimensionally mapped texture information of the object, and area image data of a specific area of one or more captured images obtained by capturing the object from one or more viewpoint positions to generate a viewing viewpoint synthesis image of a 3D model of the object viewed from a predetermined viewing position.
